(19) **Europäisches Patentamt / European Patent Office / Office européen des brevets**

(11) **EP 4 756 526 A1**

(12) # EUROPEAN PATENT APPLICATION

(43) Date of publication:
**10.06.2026 Bulletin 2026/24**

(21) Application number: **25220682.6**

(22) Date of filing: **04.12.2025**

(51) International Patent Classification (IPC):
**G02F 1/21** (2006.01)   **G02F 1/225** (2006.01)

(52) Cooperative Patent Classification (CPC):
**G02F 1/225; G02F 1/212; G02F 1/2257**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **04.12.2024 US 202463727870 P**

(71) Applicant: **Nokia Solutions and Networks Oy
02610 Espoo (FI)**

(72) Inventors:
- **HUANG, Heqing
  Chatham, NJ (US)**
- **SAYEM, Ayed al
  Chatham, NJ (US)**
- **HU, Ting-Chen
  Westfield, NJ (US)**
- **EARNSHAW, Mark
  Berkeley Heights, NJ (US)**

(74) Representative: **Nokia EPO representatives
Nokia Technologies Oy
Karakaari 7
02610 Espoo (FI)**

(54) **FABRICATION-ROBUST OPTICAL WAVEGUIDE MODULATOR**

(57)     A photonic integrated circuit for modulating light includes an electro-optic modulator disposed along a top surface of a substrate. The electro-optic modulator includes an optical waveguide segment connected between two optical waveguide loop mirrors. At least one of the two optical waveguide loop mirrors includes a Mach-Zehnder modulator (MZM) having a pair of 2x2 optical couplers at opposite ends thereof to couple light in and out of the MZM, one of the 2x2 couplers being terminated by a waveguide loop. Substituting MZI tuning circuits comprising a thermal tuner connected in series between two directional couplers for the 2x2 optical couplers can compensate for coupler fabrication errors that may affect power splitting, ensuring a near perfect 50:50 power splitting ratio thus enabling improvements in both modulation voltage and modulation bandwidth.

EP 4 756 526 A1

Processed by Luminess, 75001 PARIS (FR)

**Description**

**TECHNICAL FIELD**

The present invention relates to integrated optical devices including optical waveguide modulators.

**BACKGROUND**

Data center interconnects and broad-band telecom networks make use of optical communication modules to process the high data rates of internet traffic. Currently, silicon photonics is the most widely used technology platform for commercial, high-speed optical telecommunication networks. In the last few years, integrated photonic modulators based on electro-optic materials, such as thin-film lithium niobate (TFLN) and thin-film lithium tantalate (TFLT) have emerged as a better technology platform, generally offering superior performance when compared to silicon photonics in terms of both driving voltage and electro-optic bandwidth. Optical transceivers capable of high data rates typically use conventional TFLN or TFLT based electro-optic modulators comprising a Mach-Zehnder interferometer (MZI) integrated with traveling wave coplanar microwave electrodes. An exemplary structure of this type of conventional TFLN traveling-wave (TW) optical waveguide modulator is a Mach-Zehnder modulator (MZM) having optical waveguide arms extending along traveling-wave electrodes (TWE). This type of device is based on traveling wave (TW) electro-optic (EO) modulation which has a stringent voltage-length product "VpiL" (the product of the so-called "Vpi" drive voltage, $V_\pi$, of the modulator and the length "L" of the modulation section) that may limit the achievable electro-optic bandwidth because the electrical bandwidth scales quadratic-inversely proportional to the device length (given by the RF loss on the electrodes) and the so-called "Vpi" drive voltage, (modulation voltage $V_\pi$) of the modulator scales inversely proportional to the device length $L$ (given by the EO modulation effiency, VpiL). Using optical materials having a large Pockels effect, such as e.g. lithium niobate ($LiNbO_3$, "LN") or lithium tantalate ($LiTaO_3$, "LT"), in the waveguide arms of an MZM, enables photonic-chip integrated optical modulators with relatively low values of the $V_\pi L$ (~2-2.5Vcm) having a modulation bandwidth exceeding 100 GHz.

While TFLN modulators can offer superior performance to other current platforms, they suffer from a large form factor and strict voltage-bandwidth tradeoff. In fact, the driving voltage of such modulators typically requires RF amplifiers, which ultimately limits the achievable modulation bandwidth and dominate the power consumption. For example, a CMOS-compatible driving voltage of ~0.7CV can be achieved only with a very long modulator length (~3cm), which drastically reduces the electro-optic bandwidth to ~20-30 GHz. The low driving voltage can enable driverless optical transceivers, where modulators are driven directly by a digital-to-analog circuit (DAC), which would reduce its power consumption and improve the linearity of modulation. On the other hand, such long modulators suffer from low operational bandwidth, hence shorter modulators with a length of ~5 mm are currently being developed where the electro-optic bandwidth could go beyond 130 GHz, as needed for next-generation optical transceivers. However, such transceivers would require more than 5V driving voltage which is quite challenging with current SiGe technology and very power consuming.

The electro-optic (EO) bandwidth of such TFLN modulators is currently limited by the microwave loss (i.e. RF loss) of the co-planar transmission line electrodes, as both the impedance and the wave velocity can match their desired conditions by optimizing the optical and electrical device geometries, thanks to the tight mode confinement of the TFLN waveguides. For a standard traveling-wave MZI modulator on the TFLN platform (on a silicon substrate), the microwave propagation loss is:  $\alpha_m = \sim 0.65 - 0.7\,dB \cdot cm^{-1}\sqrt{GHz^{-1}}$ . Such microwave loss puts a strict constraint on the voltage and bandwidth of the modulator design. By suitable substrate engineering such as using quartz or silicon undercut, the voltage-bandwidth tradeoff can be decreased by almost two times. However, quartz substrates are not well-suited for thermal management and silicon undercutting requires a more complex fabrication process flow. Even with such substate engineering, long modulators (>2cm) are still needed to reduce the driving voltage within the direct driving voltage of the CMOS circuits.

While using a shorter device length could improve the bandwidth, it also increases the modulation voltage. For example, for a 100-GHz TFLN Mach-Zehnder modulator (VpiL=2.5 Vcm), the device length would be ~0.9 cm and the Vpi would be ~2.8V. This operational voltage exceeds the conventional CMOS voltage range (which is ~0.7-0.8 V), which would require the use of additional electronic driver circuits, increasing the power consumption and integration complexity.

**SUMMARY**

According to an example embodiment, provided is an apparatus. The apparatus includes an electro-optic (EO) modulator and comprising an optical waveguide segment connected between two optical waveguide loop mirrors, wherein at least one of the two optical waveguide loop mirrors comprises a Mach-Zehnder modulator (MZM). The optical waveguide segment and the two optical waveguide loop mirrors may form a Fabry-Perot cavity.

Some implementations of the apparatus may comprise an input optical waveguide connected to launch light into the Fabry-Perot cavity via one of the two optical waveguide loop mirrors. Some implementations of the apparatus may further comprise an output optical waveguide connected to output modulated light from the Fabry-Perot cavity via one of the two optical waveguide loop mirrors.

In any of the above implementations, one of the two optical waveguide loop mirrors may comprise at least one optical waveguide coupler connected to a loop optical waveguide. In some implementations, the optical waveguide segment may comprise an electrically tunable section.

In any of the above implementations, the MZM may comprise a layer of ferro-electric material disposed over a substrate. The ferro-electric material may comprise one of: Lithium Niobate, Lithium Tantalate, or Barium Titanate.

In any of the above implementations, the MZM may comprise two optical waveguide arms connected between two optical waveguide couplers. The at least one of the two optical waveguide loop mirrors may further comprise a loop waveguide interconnecting two ports of one of the two optical waveguide couplers. At least one of the optical waveguide couplers may be, e.g., a directional optical waveguide coupler.

In any of the above implementations, the EO modulator may comprise a set of electrodes configured to electro-optically modulate light in the MZM.

In any of the above implementations, one of the two optical waveguide loop mirrors may comprise the MZM, and the other of the two optical waveguide loop mirrors may comprise at least one of: another MZM or a Mach-Zehnder interferometer (MZI). In some implementations, the MZI may comprise a bias tuning section.

In any of the above implementations, an MZI circuit comprising a thermal tuner connected in series between two directional couplers can be used as a tunable, 2x2 directional optical waveguide coupler to accurately split power 50:50 between two optical waveguide segments (MZI arms) in an MZI.

A related aspect of the present disclosure provides an apparatus comprising an EO modulator integral with a substrate. The EO modulator comprises a ferro-electric layer disposed over a surface of the substrate, and a planar optical waveguide FP cavity formed, at least in part, in the ferro-electric layer. The FP cavity comprises two planar optical waveguide loop mirrors and an optical waveguide segment connected therebetween, wherein at least one of the two optical waveguide loop mirrors comprises an MZM. The ferro-electric layer may comprise one of: thin-film Lithium Niobate, thin-film Lithium Tantalate, and thin-film Barium Titanate.

A related aspect of the present disclosure provides a method for modulating light. The method comprises launching the light into an optical waveguide FP cavity comprising two optical waveguide loop mirrors and an optical waveguide segment connected therebetween, at least one of the two optical waveguide loop mirrors comprising an MZM. The method further comprises applying a modulating electrical signal to the MZM to modulate a coupling of the light into the FP cavity and/or a coupling of modulated light out of the FP cavity.

In some implementations, the method may comprise launching the light into the FP cavity via one of the two optical waveguide loop mirrors and outputting the modulated light from the other one of the two optical waveguide loop mirrors.

In some implementations, the method may comprise launching the light into the FP cavity via one of the two optical waveguide loop mirrors and collecting light reflected from said optical waveguide loop mirror as the modulated light.

Any of the above implementations of the method may comprise electro-optically or thermally tuning a refractive index in the optical waveguide segment to adjust a resonant wavelength of the FP cavity.

Any of the above implementation of the method may comprise using an electrically tunable Mach-Zehnder interferometer (MZI) in one of the two optical waveguide loop mirrors to tune at least one of: coupling of the light into the FP cavity, coupling of the light out of the FP cavity, and the finesse of the FP cavity.

In any of the above implementation of the method, one of the two optical waveguide loop mirrors may be absent of the MZM. In some of such implementation, the method may comprise launching the light into the FP cavity via the one of the two optical waveguide loop mirrors comprising the MZM; in some other implementation, the method may comprise launching the light into the FP cavity via the one of the two optical waveguide loop mirrors absent of the MZM.

An aspect of the present disclosure provides an apparatus comprising means for launching light into an FP cavity, means for collecting modulated light from the FP cavity, and means for electro-optically modulating at least one of: coupling the light into the FP cavity, and coupling the modulated light out of the FP cavity. In some implementations, the apparatus according to this aspect may include means for tuning a resonant wavelength of the FP cavity. In some implementations, the means for tuning the resonant wavelength of the FP cavity may include a thermal or electro-optic tuner. In any of the above implementations of the apparatus according to this aspect, the apparatus may include means for tuning a reflectance of one of FP cavity mirrors. In some implementations, the means for tuning the reflectance of the one of FP cavity mirrors may include a thermal or electro-optic tuner. In any of the above implementations of the apparatus according to this aspect, the means for modulating the coupling of light into the FP cavity and/or the means for modulating the coupling of light out of the FP cavity may include an optical waveguide modulator located in a mirror of the FP cavity. The optical waveguide modulator may be, e.g., an optical waveguide MZM.

According to another example embodiment, an electro-optic (EO) modulator comprising a Mach-Zehnder interferometer (MZI), a bus waveguide, and MZI tuning circuits is provided. The MZI comprises a signal electrode, two ground electrodes, and two optical waveguides. The signal electrode is situated generally parallel to and in between the two ground electrodes with one of the two optical waveguides running between the signal electrode and one of the ground electrodes on one side of the signal electrode and another of the two optical waveguides running between the signal electrode and the other one of the ground electrodes on another side of the signal electrode. The ends of the optical waveguides form two MZI arms on a proximate end of the MZI and two MZI arms on a distal end of the MZI. The two proximate ends of the waveguides form an MZI head and the two distal ends of the waveguides form an MZI tail.

Each MZI tuning circuit comprises two waveguides, a thermal tuner (TO) and two directional couplers (DC). The TO is connected in series between the two DC on one of the two waveguides and each of the two DC are connected to the two waveguides on opposite ends of each MZI tuning circuit. The first MZI tuning circuit is connected to the proximate end of the MZI and the second MZI tuning circuit is connected to the distal end of the MZI such that each of the two distal waveguide ends of the first MZI tuning circuit is connected to one of the two proximate MZI arms and each of the two proximate waveguide ends of the second MZI tuning circuit is connected to one of the two distal MZI arms. The remaining one of the two proximate waveguide ends of the first MZI tuning circuit and the remaining one of the two distal waveguide ends of the second MZI tuning circuit comprise input/output waveguides.

The bus waveguide is connected between the first and second MZI tuning circuits, such that one end of the bus waveguide is connected the remaining proximate waveguide end of the first MZI tuning circuit and another end of the bus waveguide is connected to the remaining end distal waveguide end of the second MZI tuning circuit. In this configuration, the first and second MZI circuits act as tunable beam splitters configured to split power between the two MZI arms in a beam splitting ratio of approximately 50:50. This ensures that a coupling modulation condition is achieved and maintained causing the MZI to act as a coupler section of a traveling-wave resonator so that input light fed into the EO modulator is modulated at a resonant wavelength aligned with the input light.

In some implementations, the thermal tuner in the first and second MZI tuning circuits can be used to control the beam splitting ratio. A bus waveguide thermal tuner can be connected to the bus waveguide between the first and second MZI tuning circuits such that the bus waveguide thermal tuner can control the optical phase accrued by light propagating in the bus waveguide. Two MZI arm thermal tuners can also be included, one MZI arm thermal tuner being connected to one of MZI arms on the proximate end of the MZI and the other MZI arm thermal tuner being connected to another of the MZI arms on the proximate end of the MZI. The MZI arm thermal tuners can be configured to adjust the refractive index of one or both of the MZI arms. The MZI arm thermal tuners and the MZI tuning circuit thermal tuners can be used to bias a steady state of a coupler section of the EO modulator. The total couple section of the EO modulator can include the first and second MZI tuning circuits and the MZI. The MZI tuning circuits are capable of compensating for DC fabrication errors causing a power split falling at least within a range of 15:85.

In any of the implementations, the optical phase across the MZI tuning circuits and the MZI remains invariant under EO modulation. The signal and ground electrodes can be designed such that their phase velocity and impedance are matched with a group velocity of an optical mode and a driving circuit, respectively. The EO modulator can achieve full-range tuning of the coupling ratio along with a flat transmission phase decoupled from EO tuning. Embodiments of the example EO modulators described herein can achieve a reduction of at least 6-12 times in modulation voltage over a modulator length of at least 1-10 mm as compared to a comparable non-resonant MZI device.

In any of the implementations, the EO modulator can be based on an EO material PIC. For example, in one embodiment the EO modulator can be a thin-film lithium niobate (TFLN) integrated photonic modulator fabricated on a TFLN wafer or, in another embodiment, the EO modulator a thin-film lithium tantalate (TFLT) integrated photonic modulator fabricated on a TFLT wafer.

## BRIEF DESCRIPTION OF THE DRAWINGS

Embodiments disclosed herein will be described in greater detail with reference to the accompanying drawings that represent example embodiments thereof, which are not to scale, in which like elements are indicated with like reference numerals, and wherein:

FIG. 1 is a block diagram schematically illustrating an example photonic integrated circuit (PIC) implementing a planar Fabry-Perot (FP) filter having loop-terminated 2x2 optical waveguide couplers as FP cavity mirrors;

FIG. 2 is a block diagram schematically illustrating an example integrated optical FP modulator based on the planar FP filter of FIG. 1 having a Mach-Zehnder modulator (MZM) in one of the FP cavity mirrors;

FIG. 3 is a schematic plan view of an example PIC implementing an optical FP modulator using loop-terminated MZMs in each of the two FP cavity mirrors;

FIG. 4 is a schematic plan view of an example PIC implementing an optical FP modulator having a loop-terminated MZM in one of the two planar FP cavity mirrors and heater-based biasing;

FIG. 5 is a schematic plan view of an embodiment of the PIC of FIG. 4 including a tunable Mach-Zehnder interferometer (MZI) in the other of the two FP cavity mirrors;

FIG. 6 is a schematic plan view of an embodiment of the PIC of FIG. 5 with electro-optical (EO) tuners for MZM, FP, and MZI biasing;

FIG. 7A illustrates a schematic cross-section of an MZM section of a photonic chip implementing the optical FP modulator of FIGs. 4, 5, or 6;

FIG. 7B illustrates a schematic cross-section of a thermal bias tuner section of the photonic chip implementing the optical FP modulator of FIGs. 4 or 5;

FIG. 8 is a graph showing simulated transmission characteristic of an example thin-film LN (TFLN) optical FP/MZM modulator of FIGs. 4, 5, or 6 versus an MZM drive voltage for the MZM lengths or 10mm, 7.5mm, 5mm, and 2.5mm;

FIG. 9 is a graph showing simulated electrical bandwidth and the Vpi voltage versus the MZM length for the example TFLN FP modulator of FIG. 8;

FIG. 10 is a flowchart of a method for modulating light according to an embodiment;

FIG. 11a is a block diagram schematically illustrating an example single-stage integrated optical TFLN coupling modulator based on a racetrack MZI (RMZI) in which an electro-optical modulated MZI is utilized as the coupler section of a traveling-wave racetrack resonator;

FIG. 11b is a graph showing the transmission spectra of the single-stage TFLN coupling modulator of FIG. 11a under various modulation voltages;

FIG. 12a is a block diagram schematically illustrating an example three-stage version of the single-stage TFLN coupling modulator of FIG. 11a;

FIG. 12b is a graph showing the transmission spectra of the three-stage TFLN coupling modulator of FIG. 12a under various modulation voltages;

FIG. 13a is an electric field profile for the optical and RF modes of the three-stage TFLN coupling modulator of FIG. 12a;

FIG. 13b is an optical microscope image of a fabricated version of the three-stage TFLN coupling modulator of FIG. 12a;

FIG. 14a is a block diagram schematically illustrating a test measurement setup for the three-stage TFLN coupling modulator of FIG. 12a;

FIG. 14b is a graph showing the transmission spectra of two consecutive resonances near $\lambda$= ~1550 nm for the three-stage TFLN coupling modulator of FIG. 12a under various modulation voltages using the test measurement setup of FIG. 14a;

FIG. 15a illustrates a schematic cross-section of a directional coupler (DC) section of the photonic chip implementing the TFLN coupling modulators of FIGs. 11a and 12a;

FIG. 15b illustrates a schematic cross-section of a thermo-optic tuner (TO) section of the photonic chip implementing the TFLN coupling modulators of FIGs. 11a and 12a;

FIG. 15c illustrates a schematic cross-section of an electro-optic modulator (EO) section of the photonic chip implementing the three-stage TFLN coupling modulator of FIG. 12a;

FIG. 15d is a legend;

FIG. 16a is a graph showing transmission power ratio and phase of the single-stage TFLN coupling modulator of FIG. 11a;

FIG. 16b is a graph showing transmission power ratio and phase of the three-stage TFLN coupling modulator of FIG. 12a;

FIG. 16c is a graph showing the power splitting of a directional coupler at varying waveguide widths (w) and gaps (g);

FIG. 16d is a graph showing the power splitting of a directional coupler at varying etch depths (h) and total LN thicknesses (d);

FIG. 17a is a graph showing the modulation voltage ($V_\pi$) of an MZI and the three-stage TFLN coupling modulator of FIG. 12a as a function of the EO modulation section length ($L_{EO}$); and

FIG. 17b is a graph showing the electrical (EE) bandwidth of an MZI or of the three-stage TFLN coupling modulator of FIG. 12a as a function of the EO modulation section length ($L_{EO}$).

## DETAILED DESCRIPTION OF SOME SPECIFIC EMBODIMENTS

In the following description, for purposes of explanation and not limitation, specific details are set forth, such as particular circuits, circuit components, techniques, etc. in order to provide a thorough understanding of the example embodiments described herein. However, it will be apparent to one skilled in the art that the present invention may be practiced in other embodiments that depart from these specific details. In other instances, detailed descriptions of well-known methods, devices, and circuits may be omitted so as not to obscure the description of the example embodiments. All statements herein reciting principles, aspects, and embodiments, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Furthermore, the following abbreviations and acronyms may be used in the present document:

"CMOS" Complementary Metal-Oxide-Semiconductor
"EO" Electro-Optical
"Si" Silicon
"LN" Lithium Niobate
"LNOI" Lithium Niobate on Insulator
"LT" Lithium Tantalate
"TFLN" Thin-Film Lithium Niobate
"TFLT" Thin-Film Lithium Tantalate
"PIC" Photonic Integrated Circuit
"SOI" Silicon on Insulator
"SiP" Silicon Photonics
"TW" Traveling Wave
"TWE" Traveling Wave Electrode
"FP" Fabry Perot
"MZI" Mach-Zehnder Interferometer
"MZM" Mach-Zehnder Modulator
"RF" Radio Frequency
"FSR" Free Spectral Range
"VpiL" Voltage-Length Product
"WLM" Waveguide Loop Mirror
"TT" thermal tuner
"EOT" electro-optic tuner
"CPW" co-planar waveguide

Note that as used herein, the terms "first", "second", and so forth are not intended to imply sequential ordering, but rather are intended to distinguish one element from another, unless explicitly stated. Similarly, sequential ordering of method steps does not imply a requirement of sequential order of their execution, unless explicitly stated. The term "vertical" refers to a direction generally perpendicular to a surface of the substrate along which relevant integrated circuitry is disposed. The term "horizontal" refers to a direction along the surface of the substrate. The phrase "such as", when preceded by a comma ("... , such as ..."), means that the nouns introduced by "such as" must be understood as examples, not as definitions. In other words, the phrase "such as", when preceded by a comma, is synonymous with "e.g." or "for example".

Conventional integrated photonic transmitters for high data rate communications typically use traveling-wave waveguide-based Mach-Zehnder modulators (MZMs) with co-planar transmission line electrodes. One important parameter of such modulators is a voltage-length product, referred to herein as "VpiL", where L is the length of the drive electrodes along the MZM arms, referred to hereinbelow as the "modulator length". The "Vpi" conventionally stands for the voltage $V\pi$ required to induce a relative optical phase of $\pi$ between two light signals travelling along the MZM arms. As the relative optical phase of the light signals in the MZM arms is not easily measurable, the voltage Vpi is typically estimated as the voltage required to switch the optical power of light at the modulator output between some maximum transmitted power (nominal "1") and some minimum transmitted power (nominal "0"), typically corresponding to 15-20 dB of added attenuation. The VpiL value characterizes different trade-offs of the modulator design, including a trade-off between the voltage needed to drive the modulator and the modulator bandwidth. This is because the modulation bandwidth of, e.g., TFLN MZMs is typically limited by the microwave loss of the co-planar transmission line electrodes, and thus decreases as the modulator length $L$ increases. For a typical traveling-wave MZM on a silicon substrate TFLN platform, the microwave propagation loss may be about 0.65-0.7dB/cm/$\sqrt{}$(GHz). This microwave loss typically sets an upper limit on the length $L$ of the modulator for a target modulator bandwidth, and thus also the lower limit of the $V\pi$. Using, e.g., SOI substrates with silicon undercut or quartz substrates for the modulator chip instead of conventional SOI substrates can lower the VpiL limit of the MZM. However, such substrates are either not well suited for thermal management or complicate the fabrication process. Even with such substrates, reducing the driving voltage of a TFLN-based MZM to levels available from CMOS circuits, about 0.8-0.7V typically, may still require long modulators, e.g. with $L \geq 2$cm. Accordingly, conventional traveling-wave MZMs typically require the use of RF amplifiers to amplify CMOS-generated data signals, which imposes additional power consumption, bandwidth, cost, and footprint constraints.

Resonant structures have been implemented on the silicon photonics platform to reduce the VpiL. However, because of high loss and the intrinsic correlation between the optical loss and modulation length, conventional ring-assisted modulators on silicon photonics only offer about 45 GHz bandwidth and still require a very high driving voltage, typically ~14 V which is far away from driverless modulation. Directly using the same resonant structures on the TFLN platform doesn't offer high bandwidth either. Conventional implementations of the same resonant structures on the TFLN platform typically have a very high-quality factor ($Q = 10^5 - 10^7$), which translates to an optical bandwidth of 20 MHz to 2 GHz. Thus, if we directly modulate the resonant wavelength of the resonator, photons inside the cavity cannot respond faster than the lifetime (i.e. the optical bandwidth) of the resonator. Hence, the modulation bandwidth of a high Q-factor modulator is limited by the optical bandwidth (i.e. the photon lifetime) of the resonator. While high-Q devices are more efficient in modulation voltage, photon lifetime is determined by the Q-factor. By using a low-Q resonator (Q=8000), it is possible to achieve a higher bandwidth, such as 30 GHz, but the driving voltage would be significantly higher.

Examples described below relate to optical waveguide modulators that are suitable for photonic chip integration and address one or more of the issues described above. Example embodiments of electro-optic (EO) modulators suitable for platforms such as thin-film lithium-niobate (TFLN) or thin-film lithium tantalate (TFLT) are described herein. Modulators using resonator structures, such a waveguide ring or racetrack can reduce the footprint or modulation voltage when compared to conventional waveguide modulators. It is possible to modulate the coupling rate between a resonator and a bus waveguide without shifting the resonant wavelength and, for such coupling modulators, the modulation bandwidth is not limited by the photon lifetime. The modulators proposed herein include a planar Fabry-Perot (FP) cavity having an integrated electro-optical (EO) MZM in one or both of the FP cavity mirrors. Driving the MZM in the FP mirror with an RF drive signal modulates the coupling of light into and/or out of the FP cavity, thereby modulating the transmission of light through the FP cavity, while conveniently keeping the free spectral range (FSR) and the resonance wavelengths of the FP cavity unchanged. Such coupling-mediated optical FP/MZM modulators may be configured to use lower drive voltages than their constituent MZMs, effectively reducing the VpiL limit of the modulator, and thus potentially enabling high-speed modulation in a smaller footprint and/or eliminating an RF driver amplifier between a CMOS signal source and the modulator.

In the examples described, at least one of the FP cavity mirrors includes an optical waveguide MZI comprising 2x2 integrated photonic couplers for coupling light in and out of the optical waveguide arms of the MZI, with free ports of one of the couplers being interconnected by an optical waveguide loop so that the MZI operates in reflection ("loop-terminated MZI"). The MZI may be provided with a set of TW drive electrodes, to form a loop-terminated TW MZM. The described FP/MZM modulator design may enable reducing the drive voltage, of e.g., TFLN modulators on SOI substrates down to levels available from CMOS circuits (~0.7-0.8V), without either sacrificing the modulation bandwidth or requiring a substrate undercut.

The present disclosure describes examples of the FP/MZM modulators using EO materials, such as TFLN, in the MZM arms to modulate the output light of the modulator. However, the disclosure is not limited to MZMs based on such materials, and other implementations may include MZMs with optical waveguide arms comprising other materials with electrically controllable refractive index, such as semiconductor waveguides with p/n junctions.

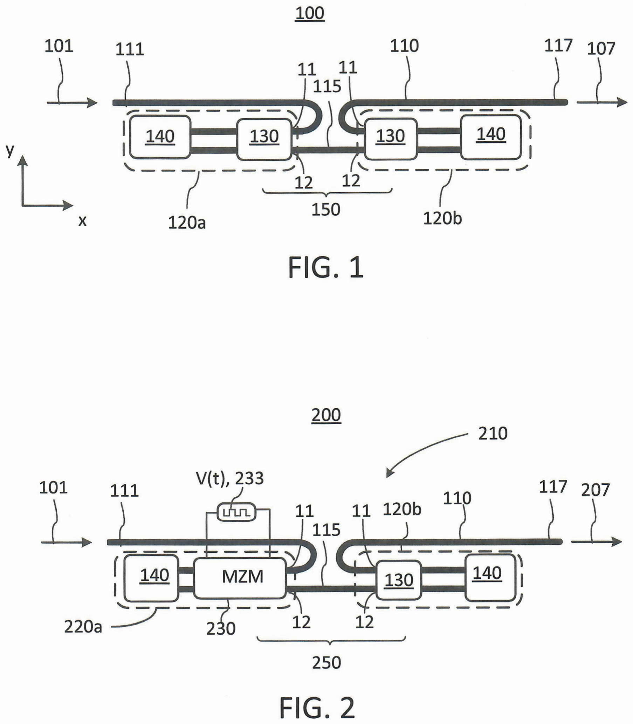

FIG. 1 is a block diagram schematically illustrating a resonant optical filter 100 that may be implemented as a photonic integrated circuit (PIC). The resonant optical filter 100 includes an optical waveguide 110 configured to form an integrated, e.g. planar, Fabry-Perot (FP) cavity 150 connected between two end segments, 111 and 117, of the optical waveguide 110. The resonant optical filter 100 may be referred to herein as the FP filter 100. The end waveguide segments 111 and 117 may function as input and/or output optical waveguide ports of the FP filter 150. The FP cavity 150 includes an optical waveguide segment 115 connected between two waveguide loop mirrors (WLMs), 120a and 120b, acting as front and rear mirrors of the FP cavity 150 ("FP cavity mirrors"). The WLMs 120a and 120b may be commonly referred to as the WLMs 120. In some example implementations, the WLMs 120 are two-port waveguide reflectors configurable so that light received into one of the two ports may be partly reflected back via the same port and partly transmitted via the other of the two ports. In the example illustrated in FIG. 1, each of the WLMs 120 includes an input/output port 11 for connecting to one of the end waveguide segments 111 and 117, and a "cavity" port 12. The "cavity" ports 12 of the WLMs 120a and 120b are interconnected by the optical waveguide segment 115. The WLMs 120 are configured so that a fraction of light received into the cavity port 12 from the optical waveguide segment 115 is reflected back into the FP cavity 150. In the illustrated example, each of the WLMs 120 includes a 2x2 optical coupler 130 ("coupler 130"), e.g. an integrated photonic coupler, with ports 11 and 12 being one of the two pairs of optical ports of the 2x2 coupler 130. Each 2x2 coupler 130 is "terminated" at one side thereof by a loop waveguide 140, which interconnects the remaining pair of optical ports of the coupler 130, i.e. the two ports at the side of the coupler 130 opposite the FP cavity 150. In the illustrated example, the WLMs 120a and 120b serve as a front and back mirror of the FP cavity 150, respectively, cooperating to cause some fraction of the input light 101 to propagate through the optical waveguide segment 115 multiple times, bouncing off the WLMs 120 at each pass.

The light 107 transmitted through (or reflected from) the FP filter 100 may be modulated by modulating the coupling of light in and/or out of the FP cavity 150 by one, or both, of the couplers 130. In configurations enabling such modulation, the FP filter 100 may function as a coupling-mediated optical modulator, with the modulation of the output light 107 being more efficient when the wavelength $\lambda$ of the input light 101 is at or near one of the cavity resonances of the FP filter 100.

FIG. 2 schematically illustrates an example PIC 210 implementing an optical modulator 200. The optical modulator 200 is a modification of the FP filter 100, in which the 2x2 optical coupler 130 in one of the FP cavity mirrors, e.g. the WLM 120a, is replaced with an integrated 2x2 Mach-Zehnder modulator (MZM) 230. The optical modulator 200, which may also be referred to as the FP modulator or the FP/MZM modulator, includes many of same elements as the FP filter 100, which are indicated in FIGs. 1 and 2 with same reference numerals, and which function as described above. Similar to the WLM 120, two optical ports at one ("distal") end of the MZM 230 are interconnected ("terminated") by the loop waveguide 140 to form a WLM 220a, with the remaining ports 11 and 12 of the MZM 230 being the input/output ports of the WLM 220a. The end waveguide segments 111 and 117 may be used as the optical waveguide ports of the FP modulator 200. The optical waveguide segment 115 connects the WLM 220a with the WLM 120b to form an FP cavity 250. In some implementations, the 2x2 optical coupler 130 in the other FP cavity mirror, the WLM 120b, may be replaced with an MZI, which may or may not be electrically tunable.

The MZM 230 enables modulating output light 207 of the optical modulator 200 by modulating the coupling of light, e.g. 101, in or out of the FP cavity 250. The coupling of light 101 into the FP cavity 250 may be modulated when the input light 101 is launched into the FP cavity 250 via the "active" WLM 220a. The coupling of light out of the FP cavity 250 may be modulated, e.g., when the output modulator light 207 leaves the FP cavity 250 via the WLM 220a. In some implementations, the optical modulator 200 may be operated in transmission, wherein the input light 101 enters the modulator 200 via one of the end waveguide segments 111 or 117, and the output light 207 leaves the modulator 200 via the other one of the end waveguide segments, 117 or 111, respectively. In some implementations, the optical modulator 200 may be configured to operate in reflection, where both the input light 101 and the output light 207 propagate via the same one of the end waveguide segments 111 or 117; in such implementations, the other one of the end waveguide segments, 117 or 111, respectively, may be absent.

By way of example, in operation the input light 101 may be launched, e.g., into the first WLM 220a via port 11 and the end waveguide segment 111. The end waveguide segment 111 serves in this example as the input optical waveguide, or the input optical port, of the modulator 200. The MZM 230 and the loop waveguide 140 cooperate to direct a first fraction $|\kappa_{11}|^2 \leq 1$ of the light 101 to couple into the optical waveguide segment 115 (FP cavity 250) via port 12 as in-coupled light, and to direct a second fraction $|\kappa_{12}|^2$ of the light 101 to leave the WLM 220a via port 11 as "lost light". The lost light may then be absorbed somewhere in the system. The complex coefficient $\kappa_{11}$ describes the coupling of light into the FP cavity 250 by the WLM 220a, which may be electro-optically modulated by an electrical RF signal V(t) 233 applied to the MZM 230. The in-coupled light adds to the light already present in the cavity 250 and propagating toward the WLM 120b. The WLM 120b reflects a fraction $|\kappa_{21}|^2 \leq 1$ of the received light back into the FP cavity 250 to propagate toward the WLM 220a and transmits the second fraction $|\kappa_{22}|^2$ of the received light via the output port 11 and the waveguide 117 as the output light 207 of the FP optical modulator 200. The (complex) transfer function T of the FP filter 200 may be approximately described by the following equation (1):

$$T = \frac{\kappa_{11} \cdot \kappa_{22} \cdot \eta}{1 - \kappa_{12} \cdot \kappa_{21} \eta^2 \exp(j\phi)} \qquad (1)$$

where $\eta \leq 1$ accounts for the optical propagation loss in the waveguide segment 115, $\phi$ is the optical phase accrued after a round-trip in the waveguide segment 115, with $|T|^2$ describing the optical power transmission through the FP cavity 250. At resonances, the total optical phase accrued, after a round-trip in the FP cavity and reflections from the WLMs 220, is an integer multiple of $2\pi$, and the modulator transmission is proportional to the product $|\eta \cdot \kappa_{11} \cdot \kappa_{22}|^2$ amplified at resonances by a cavity effect.

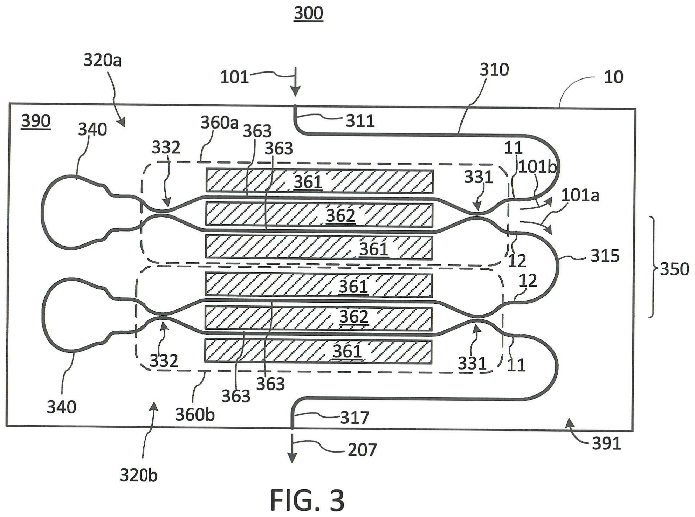

FIG. 3 schematically illustrates, in a plan view, an example electro-optic (EO) modulator 300 integrated in a photonic chip 10, e.g. along a top surface 391 of a substrate 390 of the chip. The EO waveguide modulator 300 is an embodiment of the optical modulator 200 and may be referred to as the FP modulator 300, the FP/MZM modulator 300, or simply as the modulator 300. The substrate 390 may be a single-layer or multi-layer structure, whose top surface 391 is roughly or substantially planar. The substrate 390 may be, for example, a silicon substrate, a silicon-on-insulator (SOI) substrate, a sapphire substrate, or any other suitable substrate. The modulator 300 includes an optical waveguide 310 disposed upon the top surface 391 such that some parts thereof form an integrated, e.g. planar, FP cavity 350. The FP cavity 350 comprises an optical waveguide segment 315 connected between two planar WLMs 320a and 320b, commonly referred to herein as the WLMs 320 and operating as the mirrors of the FP cavity 350. In the illustrated example, each of the WLMs 320a and 320b includes a corresponding integrated MZM, i.e. an MZM 360a and an MZM 360b respectively, commonly referred to herein as the MZMs 360. The folded configuration of the FP cavity 350 allows reducing the length of the modulator 300 typically to approximately the length of one of the WLMs 320. In other implementations, the MZMs 360 may be linearly aligned along a common axis, or along respective intersecting axes, and the waveguide segment 315 interconnecting them may or may not be straight.

Each of the MZMs 360 includes a pair of optical waveguide segments 363 ("MZM arms 363") connected in parallel between two integrated 2x2 photonic couplers 331 and 332, each implemented as a directional optical waveguide coupler in the shown example. In another example, 2x2 multi-mode interference (MMI) couplers could be used. The couplers 331 and 332 may each be, e.g., a 3 dB coupler, splitting light received into one of the ports between a pair of opposing ports in approximately equal parts. Free ports 11, 12 of the coupler 331 ("input coupler 331") serve as the input and output ports of the corresponding WLM 320a or the WLM 320b, with ports 12 thereof being interconnected by the optical waveguide segment 315 to form the FP cavity 350. The second, distal (from the FP cavity 350) coupler 332 ("distal coupler 332") of each MZM 360 is terminated by a waveguide loop 340 interconnecting the two free ports of said coupler ("loop-terminated MZM"). The remaining free ports 11 of the WLMs 320a and 320b are connected to end segments 311 and 317 of the optical waveguide 310 and serve as the input/output optical ports of the FP modulator 300.

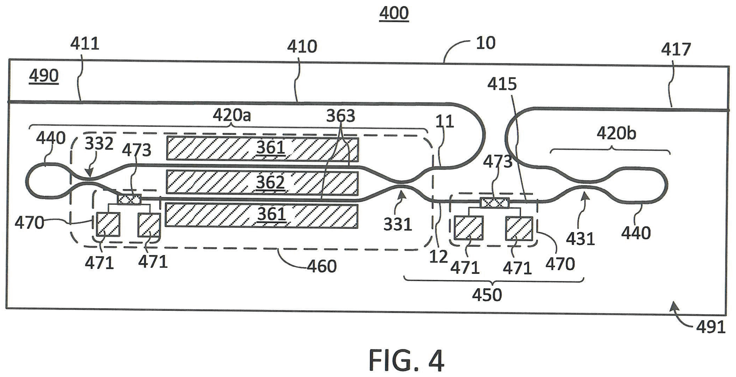

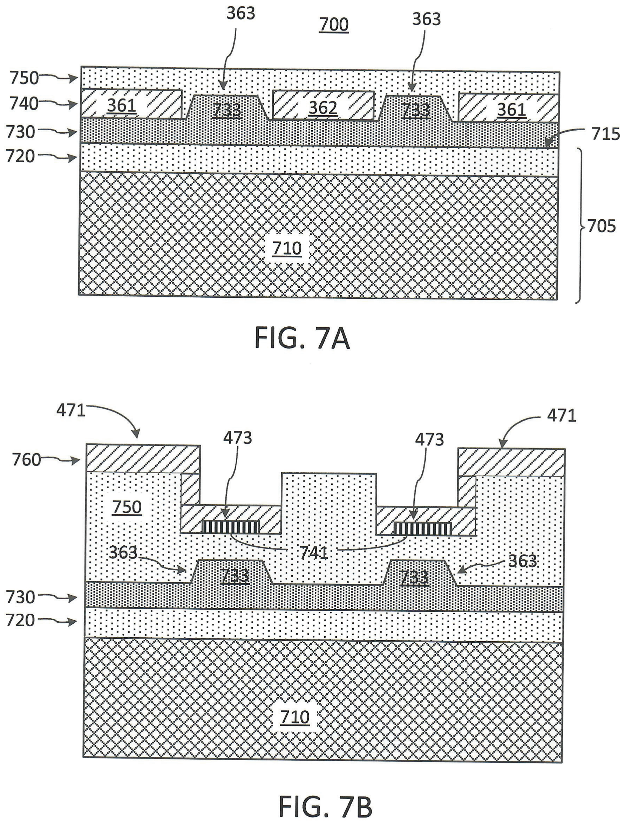

In an example implementation, the optical waveguide 310, at least in the segments thereof forming the MZM arms 363 of the MZMs 360, has an optical waveguide core comprising, typically, suitable electro-optic (EO) material exhibiting Pockels effect, such as lithium niobate, e.g. thin-film lithium niobate (TFLN) (e.g. 730, FIG. 7A). Each of the MZMs 360 further includes a set of drive electrodes 361, 362, 361 for controlling the phase of light propagating in the MZM arms 363. In the illustrated example, the set includes a signal electrode 362 extending between the MZM arms 363, and two ground electrodes 361 extending along the signal electrode 362 at opposite sides of the MZM arms 363 to induce oppositely directed electrical fields in the MZM arms 363. Light propagating in the MZM arms 363 of each of the MZMs 360 may be push-pull modulated, e.g., by connecting ground electrodes 361 of the MZM 360 to ground and applying an alternating RF voltage signal to a signal electrode 362 of the MZM. Each of the MZMs 360 may further include one or more bias sections (see e.g. FIGs. 4-6, not shown in FIG. 3) to control an operating point of the MZM, as known in the art. In a typical traveling-wave (TW) modulator implementation, the two ground electrodes 361 and the signal electrode 362 of each of the MZMs 360 may form a co-planar microwave transmission line, which may be suitably terminated at one end thereof (not shown).

By way of example, in operation, input light 101 may be launched into the first WLM 320a via the first end segment 311 of the waveguide 310 and port 11 of the input coupler 331 of the first WLM 320a. The input coupler 331 splits the light 101 between the MZM arms 363 to propagate toward the distal coupler 332, where the corresponding parts of the light are again split between two output ports of the distal coupler 332 and then looped back by the loop waveguide 340 into the MZM 360a in a crisscross manner. The looped-back light then propagates along the MZM arms 363 in the return direction toward the input coupler 331. Depending on the phase accrued by the different parts of the light 101 by the back-and-forth propagation in the WLM 320a, the input coupler 331 may direct a first fraction of the light 101 to leave the WLM 320a via port 12 as in-coupled light 101a, and to direct a second fraction of the light 101 to leave the WLM 320a via port 11 as the "lost light" 101b. The in-coupled light 101a adds to the light already in the cavity 350 that propagates toward the WLM 320b. The WLM 320b, which may operate similarly to WLM 320a, reflects a first fraction of the received light back into the FP cavity 350 to propagate toward the WLM 320a, and transmits a second fraction of the received light via the output port 11 and the waveguide 317 as the output modulator light 207.

The push-pull modulation of the MZM 360a by an alternating voltage signal of a suitable amplitude may result in the WLM 320a operating as a light steering switch, directing more of the light 101 to leave the WLM 320a via either port 11 or port 12 in an alternating manner, thereby modulating the FP coupling efficiency of the WLM 320a $|\kappa_{12}|^2$ between a high value $|\kappa_{12}|^2_{max}$ and a low value $|\kappa_{12}|^2_{min}$, corresponding to an extinction ratio of the in-coupled light 101a $R_{ext1}= |\kappa_{12}|^2_{max}/|\kappa_{12}|^2_{min}$. Similarly, driving the MZM 360b with a pulsed voltage signal may modulate the out-coupling efficiency of the WLM 320b $|\kappa_{21}|^2$ between a high value $|\kappa_{21}|^2_{max}$ and a low value $|\kappa_{21}|^2_{min}$, corresponding to an input-referenced extinction ratio at the output of the WLM 320b $R_{ext2} = |\kappa_{21}|^2_{max}/|\kappa_{21}|^2_{min}$. Synchronized driving of the MZMs 360a and 360b may result in the output modulator light 207 of the modulator 300 being modulated with an extinction ratio that is greater than either $R_{ext1}$ or $R_{ext2}$.

FIG. 3 illustrates an example configuration of an FP/MZM coupling modulator wherein each of the FP cavity mirrors, the WLMs 320a and 320b, includes an MZM 360 that, in operation, may be driven by a corresponding high-speed RF modulation signal; accordingly, the modulator configuration shown in FIG. 3 may be referred to herein as the dual-drive configuration. In some implementations, the two MZMs 360 at opposite sides of the FP cavity 350 may be nominally identical. In some other implementations, the two MZMs 360 at opposite sides of the FP cavity 350 may differ from each other.

FIGs. 4-6 illustrate examples of FP/MZM coupling modulators in a single-drive configuration, i.e. where only one of the FP cavity mirrors includes an MZM. Here, the terms "single-drive" and "dual-drive" refer to the presence of optical modulators in either just one or both FP cavity mirrors, respectively, and do not limit the number of separately driven segments in the corresponding MZMs.

FIG. 4 illustrates an example integrated FP/MZM coupling modulator 400 ("FP modulator 400") having a single-drive configuration. In the FP modulator 400, an optical waveguide segment 415 is connected between an active WLM 420a and a passive WLM 420b, such as to form an FP cavity 450 wherein the WLM 420a and WLM 420b function as FP mirrors. The FP modulator 400 of FIG. 4 is a modification of the FP modulator 300 of FIG. 3 and includes several of the same elements, which are indicated in FIGs. 3 and 4 with same reference numerals and may not be described here again. In the illustrated example, the optical waveguide 410 includes end waveguide segments 411 and 417, which are examples of the end segments 311 and 317 of the optical waveguide 310 of FIG. 3. In various implementations, each of the end waveguide segments 411 and 417 may be used as the input and/or output optical waveguide, or optical port, of the FP modulator 400.

Similarly to the FP modulator 300, the FP modulator 400 may be implemented as a PIC in a photonic chip 10, the PIC including an optical waveguide 410 disposed along a surface 491 of a substrate 490 and integrated with the substrate. The chip 10, the substrate 490, the surface 491, and the optical waveguide 410 may be examples of the chip 10, the substrate 390, the surface 391, and the optical waveguide 310 described above with reference to FIG. 3.

The WLM 420a is an example implementation of the WLM 320a or WLM 320b described above. The WLM 420a includes a loop-terminated MZM 460, having a set of drive electrodes 361, 362, 361 and two output ports interconnected by a waveguide loop 440, generally as described above with reference to the MZMs 360 and the waveguide loops 340 of FIG. 3. The MZM 460 further includes an MZM bias section 470 to control a bias setting of the MZM 460, i.e. the MZM transmission from port 11 to port 12 in the absence of a voltage signal applied to the signal electrode 362. In the example illustrated in FIG. 4, the bias section 470 is a thermal tuner (TT) configured to locally adjust the refractive index of one or both of the MZM arms 363 by heating. The TT 470 includes a bias electrode 473 adjacent to a segment of one of the waveguide arms of the MZM 460, e.g. directly over the segment. In this example, the bias electrode 473 is a heating element electrically connected between two metal contact pads 471, which are configured to provide a tunable voltage across the bias electrode 473. Another TT 470 may be provided at the optical waveguide segment 415 to control the optical phase accrued by light propagating in the FP cavity 450 between the WLM 420a and 420b, e.g. to tune the resonance wavelengths of the FP cavity 450. The couplers 331 and 332 of the MZM 460 may each be, e.g., a 3 dB coupler, splitting light received into one of the ports between a pair of opposing ports in approximately equal parts.

The FP modulator 400 differs from the FP modulator 300 in that the WLM 420b is passive, and in the illustrated embodiment comprises a 2x2 waveguide coupler 431 terminated at one side thereof by a loop waveguide 440. The 2x2 waveguide coupler 431 may be an integrated optical coupler similar to the 2x2 optical waveguide couplers 331 and 332 of the MZM 460. The coupler 431 may be configured to direct more of the received light into the waveguide segment 415 than into the end waveguide segment 417. In some implementations, the coupler 431 may have a tunable coupling ratio. In an example operation wherein input light enters the FP modulator 400 via the optical waveguide segment 411 and the active WLM 420a, applying an electrical modulating signal to the MZM 460 modulates the in-coupling of light into the FP cavity 450, as described above with reference to FIG. 3 and the MZM 360a, thereby also modulating the transmission of light through the FP modulator 400. The out-coupling of light from the FP cavity 450 to the modulator output, e.g. via the output waveguide 417, in this example is fixed by the coupling ratio of the coupler 431 of the WLM 420b, which may differ from 50:50. Alternatively, the input light may also be launched into the FP cavity 450 via the passive WLM 420b; in this case, applying an electrical modulating signal to the MZM 460 modulates the out-coupling of light from the FP cavity 450, as described above with reference to FIG. 3 and the MZM 360b, thereby also modulating the transmission of light through the FP modulator 400. Note that the dimensions of different sections of the FP/MZM modulator 400 in FIG. 4 is not to scale; e.g., in a typical implementation the length $L$ of the MZM electrodes 361, 362 along the axis of light propagation may greatly exceed the length of the bias electrode 473, each of the waveguide loops 440, and the optical couplers 331, 332, so that the overall length of the modulator may be mostly limited by the MZM electrode length L.

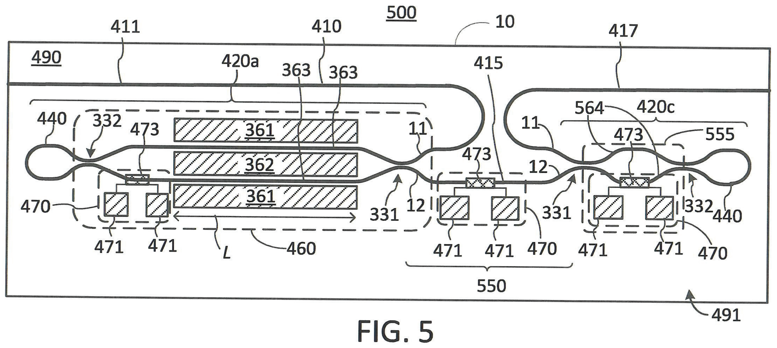

FIG. 5 illustrates a modification of the FP modulator 400, which is referred to herein as an FP modulator 500. Similarly to the FP modulator 400, the FP modulator 500 is a single-drive integrated coupling modulator and includes many of the same elements as the FP modulator 400, with same reference numerals indicating similar elements in FIGs. 4 and 5. In the illustrated example, the FP modulator 500 includes the optical waveguide segment 415 connected between the active WLM 420a as described above and a passive WLM 420c, which now includes a passive MZI 555. In the context of this specification, "passive" refers to the absence of an RF transmission line to drive the corresponding element with a high-speed data signal to modulate light propagating therethrough, but the element may otherwise be tunable during or prior to operation to provide a suitable bias, e.g. as described below. The WLMs 420a, the WLM 420c, and the optical waveguide segment 415 connected therebetween form an FP cavity 550.

In the example illustrated in FIG. 5, the MZI 555 includes a pair of integrated 2x2 optical waveguide couplers 331 and 332 interconnected by two optical waveguides forming MZI arms 564, and a version of the bias circuit 470 to control the optical phase difference between light signals propagating in the two arms 564 of the MZI 555, thereby controlling the optical coupling between the input/output ports 11, 12 of the WLM 420c and the transmission of light through the WLM 420c. The ability to tune the in-coupling or out-coupling of light through a passive FP cavity mirror of a single-drive FP modulator may be advantageous for optimizing modulation characteristics of individual devices. In operation, the MZI 555 may be biased such as to approximately maximize its transmission at a resonant wavelength of the FP cavity 550. By way of example, the bias of the MZI 555 may be set such that the WLM 420c transmits, e.g., 2-10 % of the incoming light.

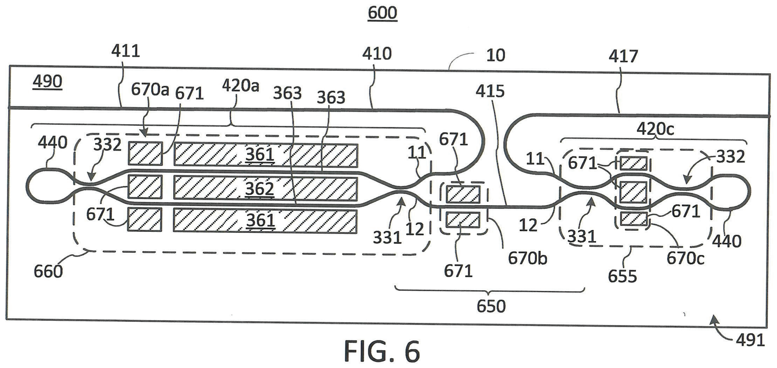

FIG. 6 illustrates an example FP modulator 600, which is a modification of the FP modulator 500 of FIG. 5, wherein the thermal tuners 470 in the bias sections of the MZM 460, the FP cavity 550, and the MZI 555 of the FIG. 5 FP modulator 500 are replaced with electro-optic tuners (EOTs) 670a, 670b, and 670c in MZM 660, FP cavity 650, and MZI 655 of FIG. 6, respectively. The EOTs 670a, 670b, and 670c each include at least a pair of electrodes 671 disposed at opposite side of a segment of a corresponding optical waveguide to electro-optically vary the reflective index of the waveguide responsive to a bias voltage applied between the adjacent pair of electrodes 671. Devices using EOTs instead of the TTs for bias control may have lower power consumption but may lead to a larger footprint of the device, as the thermal tuning typically allows varying the refractive index of the waveguide over a greater range. In the context of this specification, sections of the MZM, MZI, or the FP cavity including either the EOT-based bias elements (e.g. 670) or the TT-based bias elements (e.g. 470) may be referred to as the electrically tunable sections.

FIG. 7A schematically illustrates a partial cross-section across an MZM portion of an example photonic chip 700 that may be used to implement any of the FP modulators described above with reference to FIGs. 2-6. In this configuration, the chip 700 includes a substrate 705 having a planar surface 715. The substrate 705 includes a layer 720 of insulating material, such as but not limited to, e.g., silicon dioxide ($SiO_2$), located over a base 710, typically but not exclusively a silicon substrate. In an example implementation, the substrate 705 is a SOI substrate. An optical layer 730, e.g. a layer of TFLN or other suitable EO material, is located over the insulating layer 720. Some implementations may include one or more other layers of, e.g., silicon, silicon dioxide, silicon nitride, located between the SOI substrate 705 and the optical layer 730. Each ridge 733 in the EO material of the optical layer 730 forms an optical core of one of the optical waveguide arms 363 of the MZM, e.g. any one of the MZMs 360a, 360b, 460, or 660 described above. Drive electrodes 361, 362 are metallic electrodes located in a layer 740 above the optical material of the layer 730 to form a co-planar electrical transmission line. A layer 750 of suitable cladding material, e.g. $SiO_2$, is disposed over the ridges 733.

An electrode configuration similar to that illustrated in FIG. 7A may also be used in a bias control section of the MZM for an example MZM implementation with the EO tuning of the bias, e.g. the MZM 660 of FIG. 6.

FIG. 7B schematically illustrates a partial cross-section across a bias control portion of the MZM for an example implementation with thermal tuning of the bias, e.g. the MZM 460 of FIGs. 4 and 5. In this example, the bias electrodes 473 are implemented with nanowires 741 of suitable electrically conducting material having a relatively high resistance, e.g. NiChrome (NiCr), disposed on top of the cladding material layer 750 over the ridges 733. Other suitable materials such as Platinum (Pt), Titanium (Ti), etc. can also be used for the nanowires 741. Electrical contact pads 471 for the bias electrodes 473 (nanowires 741 in FIG. 7b) may be formed in a metallic layer 760 of a suitable low-resistance material, e.g. gold (Au).

In the illustrated example, the ridges 733 are so called "shallow ridges", i.e. a thinner layer of the EO material is still present away from the ridges 733; in other implementations, the EO material away from the ridges 733 may be absent, e.g. removed in manufacturing, and suitable cladding material may, optionally, be deposited over the ridges 733 to form optical cores of channel optical waveguides. In some implementations, the drive electrodes 361, 362 may be vertically offset relative to the optical cores of the waveguides 363. In some implementations, the optical cores of the waveguide arms 363 may be hybrid optical cores formed using optical guiding ribs of a suitable material, e.g., silicon or silicon nitride, having a greater refractive index than the cladding layers, and being disposed in direct contact with a uniform layer of the EO material, e.g. the TFLN; examples of such MZMs are described, e.g., in the US patent publication US2023/0055077, which is incorporated herein by reference in its entirety.

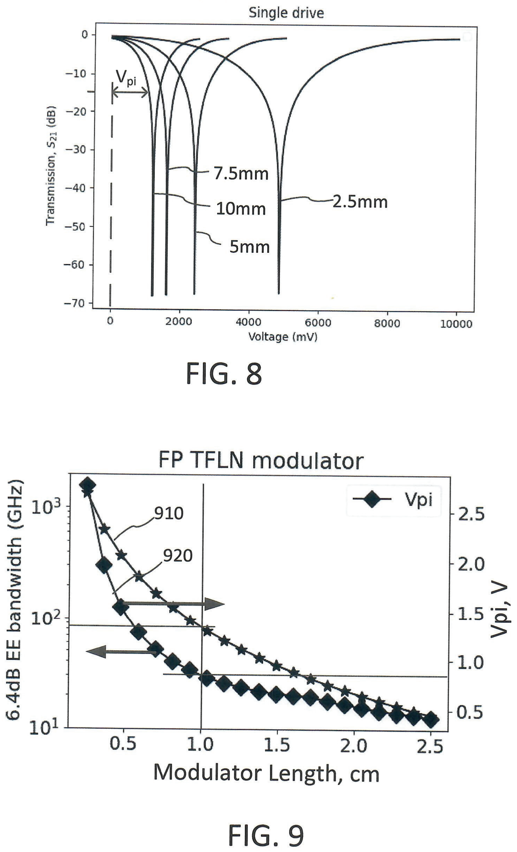

FIG. 8 illustrates transmission characteristics generated by a computer model of an example single-drive FP/MZM coupling modulator, such as the FP modulator of FIGs. 5 or 6, versus the drive voltage for four different MZM lengths $L$: 10mm, 7.5mm, 5mm, and 2.5mm. In the simulation, continuous wave light was injected into the second, passive WLM (e.g. WLM 420c of FIGs. 5 or 6), and output from the active MZM-comprising WLM (e.g. WLM 420a of FIGs. 5 or 6). The MZI bias of the second, passive WLM of the FP cavity was set to nearly maximize its reflectance at a resonant wavelength of the FP cavity. The length of the optical waveguide forming the FP cavity is ~ 500 micrometers ($\mu$m), the length of the optical waveguide loop is ~ 500 $\mu$m, the length of each of the directional couplers is ~ 200$\mu$m. The optical loss in each section of the optical waveguide is assumed to be 0.2 dB/cm. The MZM is TFLN-based and is configured to have the VpiL product of about 2.5V·cm..

FIG. 9 illustrates simulation results for electrical-to-electrical bandwidth (910) and the effective Vpi (920) versus the MZM length for the FP/TFLN MZM modulator as described above with reference to FIG. 8. Here, the "effective Vpi" is defined as the drive voltage $V_d$ of the MZM that reduces the optical power at the output of the FP modulator by 15 dB, when the MZM is biased for maximum transmission at $V_d$=0. Perfect impedance and velocity matching conditions are assumed, with the RF loss for the electrodes of about $0.7\mathrm{dBcm}^{-1}\sqrt{\mathrm{GHz}^{-0.5}}$.

As can be seen from FIG. 8, the positioning of the MZM in one of the mirrors of the FP cavity as described above may allow a substantial reduction in the VpiL product of the FP/MZM modulator, e.g. down to less than 1V·cm, or by a factor of about 3 in the simulated example; e.g., an FP/MZM modulator with a 1 cm long TFLN MZM may have a bandwidth of about 85 GHz (FIG. 9) and not require more than about 0.8V of peak drive voltage to pulse-modulate light with an on/off extinction ratio of ~15 dB, therefore potentially enabling direct modulation from a CMOS-based signal source.

The reduction of the VpiL product in the FP modulators may also allow reducing the MZM length to increase the modulation bandwidth of the modulator for a same operating voltage range or, to some extent, to combine reducing the operating voltage range while at the same time increasing the modulator bandwidth as compared to the MZM itself.

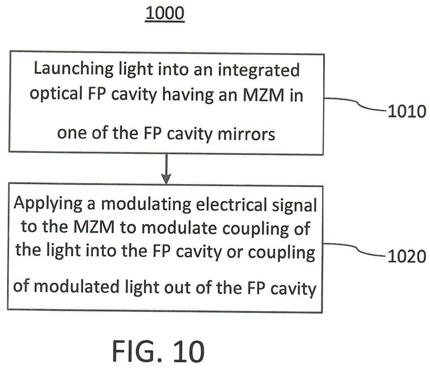

Referring to FIG. 10, an aspect of the present disclosure provides a method 1000 for modulating light using an integrated PIC, such as illustrated in FIGs. 2-6. The method may include (1010) launching the light into an optical waveguide Fabry-Perot (FP) cavity comprising two planar optical waveguide loop mirrors and an optical waveguide segment connected therebetween, at least one of the two planar optical waveguide loop mirrors comprising a Mach-Zehnder modulator (MZM). The method 1000 may further include (1020) applying a modulating electrical signal to the MZM to modulate a coupling of the light into the FP resonator. In some implementations, the method may comprise launching the light into the FP cavity via one of the two optical waveguide loop mirrors and outputting the modulated light from the other one of the two optical waveguide loop mirrors.

In some implementations, the method may comprise launching the light into the FP cavity via one of the two optical waveguide loop mirrors and collecting light reflected from said optical waveguide loop mirror as the modulated light.

The example optical FP/MZM modulators described above may have several advantages over conventional non-resonant MZM-based modulators. Indeed, the examples described may allow a considerable reduction of the modulator VpiL product without requiring such complex fabrication processes as deep under-etching of silicon substrate, or using substrates that complicate thermal management, such as quartz. The lower modulator VpiL product potentially enables a higher modulator bandwidth and a smaller footprint for a same or lower drive voltage. e.g., results illustrated in FIG. 9 suggest that an FP/MZM modulator having about 6mm long TFLN MZM may potentially enable a modulation bandwidth of about 300GHz with a V$\pi$ of about 2V. Conversely or simultaneously, the lower drive voltage of the FP/MZM modulators for a same or even smaller MZM length potentially provides at least the benefit of lowering the overall power consumption of the modulator, potentially enabling high-speed optical transmitters that are driven directly from CMOS chips without RF drive amplifiers.

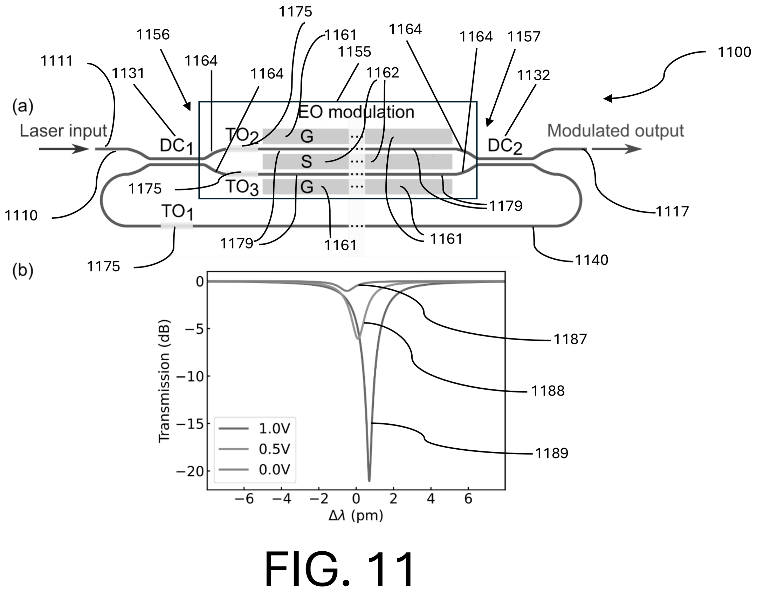

Referring now to FIG. 11a, an example embodiment of a single-stage racetrack MZI (RMZI) based modulator 1100 is shown. RMZI-based modulator 1100 is a common configuration of a resonator-based integrated optical modulator that is utilized by modulating the resonant wavelength of a critically coupled resonator. In this embodiment, the RMZI-based modulator 1100 comprises a racetrack Mach-Zehnder interferometer-based integrated electro-optical modulator comprising an EO modulated MZI 1155 as the coupler section of a traveling-wave (ring or racetrack) resonator. The MZI 1155 includes a signal electrode 1162 positioned between two ground electrodes 1161 with optical waveguides running through the MZI 1155, one on each side of the signal electrode 1162 between the signal electrode 1162 and one of the ground electrodes 1161 forming MZI arms 1164. The MZI head 1156 and MZI tail 1157 each comprise a 2x2 waveguide directional coupler (DC) 1131, 1132, such as a 3-dB directional coupler, interconnected by the MZI arms 1164 such that the couplers 1131, 1132 split power 50:50 between the two MZI arms 1164.

The optical waveguide 1110 of the RMZI-based modulator 1100 includes end waveguide segments 1111 and 1117 which may be used as the input and/or output optical waveguide, or optical port, of the RMZI-based modulator 1100. As shown in FIG. 11a, the input coupler (DC1) 1131 couples the input end waveguide segment 1111 and one end of the bus waveguide 1140 to the MZI arms 1164 at one end of the MZI 1155 and the output coupler (DC2) 1132 couples the MZI arms 1164 to the output end waveguide segment 1117 and the other end of the bus waveguide 1140. In addition, a thermo-tuner $(TO_1)$ 1175 is included in the bus waveguide 1140 and a pair of thermo-tuners $(TO_2, TO_3)$ 1175 are included, one each, on the MZI arms 1164 at the input side of the MZI 1155. Thermo-tuners $(TO_2, TO_3)$ 1175, on the MZI arms 1164, can be configured to adjust the refractive index of one or both of the MZM arms 1164 by heating. Thermo-tuner $(TO_1)$ 1175 can be configured to control the optical phase accrued by light propagating in the bus waveguide 1140. Similar to other example embodiments described herein, the RMZI-based modulator 1100 may be implemented as a PIC in a photonic chip, the PIC including the optical waveguide 1110 disposed along a surface of a substrate and integrated with the substrate.

As mentioned herein, by modulating the coupling rate between the resonator and the bus waveguide in a resonator-based optical modulator, it is possible to avoid the bandwidth limitations suffered by conventional, high-Q factor, resonator-based optical modulators caused by the photon lifetime of the resonator. However, the coupling conditions of such resonators should be carefully managed to avoid shifts in the resonant wavelength associated with the EO modulation across the modulation voltage. Component fabrication errors can sometimes affect resonator coupling conditions enough to cause shifting resonant wavelength problems. One such fabrication error may be caused by imperfect power splitting on the directional couplers (DCs). In some situations, this shift in resonant wavelength can create a condition in which the coupling modulation condition is no longer met. As described above, when this happens, the photon lifetime of the resonator can become a limiting factor for the device bandwidth thus decreasing the device's modulation bandwidth.

FIG. 11b is a graph illustrating one example of a shifting resonant wavelength across modulation voltage which can be caused by fabrication errors. Figure 11b shows the device transmission spectra at a modulation voltage near 0.0V 1187, 0.5V 1188, and 1.0V 1189. As shown in FIG. 11b, a shift of the resonant wavelength at different modulation voltages can cause the device to suffer from a bandwidth decrease limited by the photon lifetime, which is ~0.2 GHz for the example embodiment of FIG. 11a.

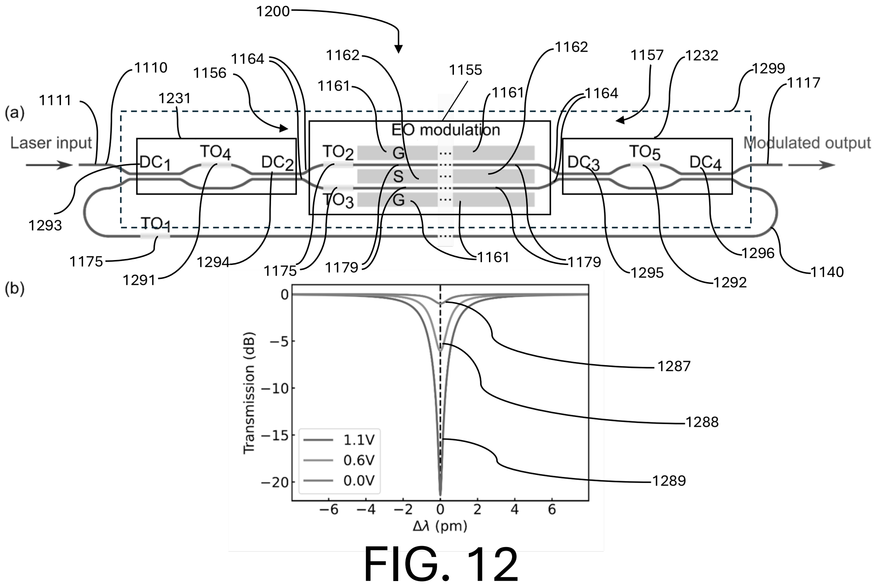

Another example embodiment of an RMZI-based modulator is illustrated in FIG. 12a. This embodiment is similar to the embodiment illustrated in FIG. 11a and includes several of the same elements, which are indicated in FIGs. 11a and 12a with the same reference numerals and may not be described here again. The RMZI-based modulator of FIG. 12a is a cascaded, three-stage MZI coupled racetrack resonator configured as a coupling modulator in which each of the passive, directional couplers (DC1 1131 and DC2 1132) of the single-stage RMZI modulator 1100 of FIG. 11a is replaced by an active, thermo-optic MZI circuit 1231, 1232, such that the total coupler section 1299 of the RMZI modulator 1200 is now composed of three MZI stages 1231, 1155, 1232. When tuned at proper thermal bias, each of the thermo-optic MZI circuits 1231, 1232 functions as a very accurate 50:50 splitting 2x2 coupler. Having a proper 50:50 power split due to the MZI circuits 1231, 1232 ensures that the coupling modulation condition can be achieved and maintained. The MZI circuits 1231, 1232 have a much higher tolerance for fabrication errors compared to the directional couplers 1131, 1132 used by the RMZI-based modulator 1100 of FIG. 11a. In fact, as long as the power splitting ratio falls within 0.15-0.85, the thermo-optic MZI circuits 1231, 1232 can be tuned to 50:50 splitting via the use of the additional heater 1291, 1292 included each thermo-optic MZI circuit 1231, 1232. This ensures the optical phase across the three-stage MZI coupler 1200 remains invariant under EO modulation, so that the RMZI resonant wavelength stays aligned with the input light source. By successfully implementing a resonator-based TFLN coupling modulator with the increased tolerance of fabrication errors associated with MZI circuits 1231, 1232, the three-stage RMZI modulator 1200 design can deliver a high modulation bandwidth with a low operational voltage (to the CMOS level) on a compact device footprint.

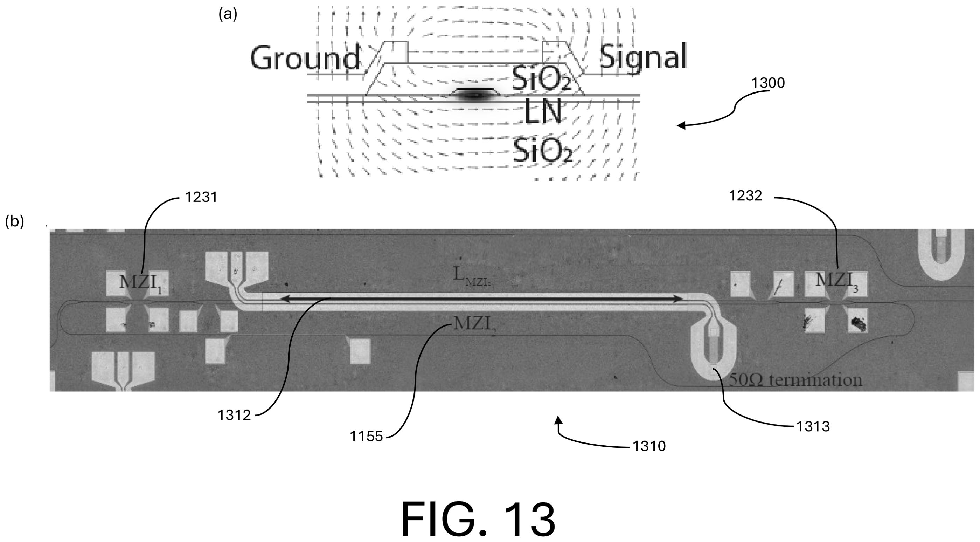

Each of the thermo-optic MZI circuits 1231, 1232 comprises a thermal heater (TO) 1291, 1292 placed in series between two directional couplers (DC) 1293, 1294, 1295, 1296. So, in addition to the original MZI stage of RMZI 1100 of FIG. 11a comprising MZI 1155, each of the thermo-optical MZI circuits 1231, 1232 constitutes an additional MZI stage making RMZI 1200 of FIG. 12a a three-stage RMZI-based modulator 1200. Also, similar to other example embodiments described herein, the three-stage RMZI-based modulator 1200 is based on an EO material PIC such as thin-film lithium niobate (TFLN). FIG. 13a shows an optical microscope image 1310 of a fabricated embodiment of the three-stage RMZI-based modulator 1200. The thermo-tuning ability provided by the active, thermo-optic MZI circuits 1231, 1232 used in the three-stage RMZI 1200 removes any concerns about imperfect power splitting due to directional coupler fabrication errors causing a photon lifetime limitation on modulation bandwidth.

FIG. 12b is a graph illustrating one example of the stable resonant wavelength across modulation voltage which can be achieved by the fabrication error tolerant three-stage RMZI-based modulator 1200 of FIG. 12a. As shown in FIG. 12b, the resonant wavelength of modulator 1200 remains stable across a range of modulation voltages including near 0.0V 1287, 0.5V 1288, and 1.0V 1289.

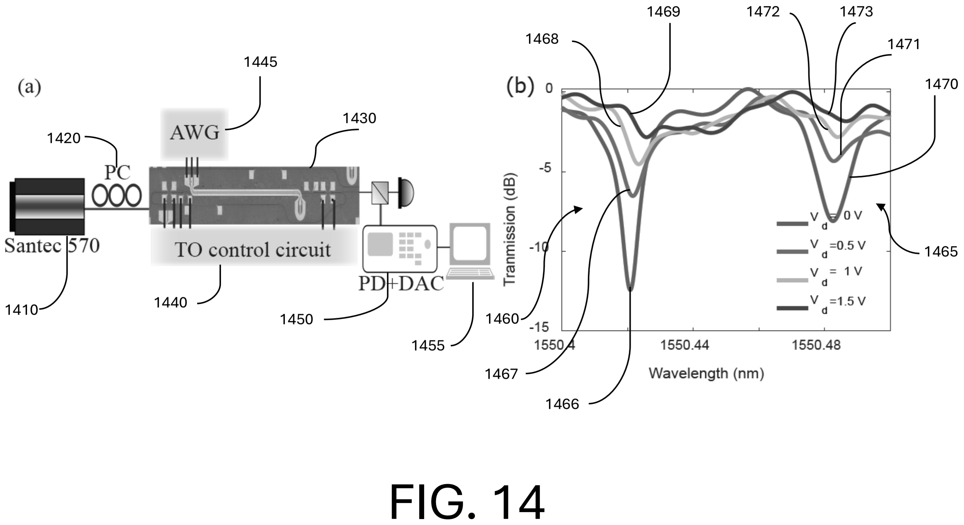

Referring now to FIGs 13 and 14, experimental testing run on the example embodiment shown in FIGs. 12a and 13b verifies that embodiments of the three-stage RMZI-based modulator described herein offer near CMOS-level drive voltage with only a 3.75 mm long modulator. FIG. 13a shows an electric field profile 1300 for the optical and RF modes of the three-stage RMZI-based modulator 1200 and FIG. 13b shows an optical microscope image 1310 of one fabricated embodiment of the three-stage RMZI-based modulator 1200 of FIG. 12a. Under testing, the device showed immunity to typical directional coupler fabrication errors by using stable thermal bias circuits with tunable splitting ratios. The RF-loss limited bandwidth loss of the device can be extrapolated to be beyond 200 GHz. The test device comprises a three-Mach-Zehnder interferometer (MZI) with a racetrack resonator. Using this design, MZI$_1$ 1231 and MZI$_3$ 1232 act as a tunable beam splitter where the beam splitting ratio is controlled by a thermo-optic (TO) heater 1291, 1291 placed on top of the MZI waveguides 1164. MZI$_2$ 1155 comprises a traveling wave co-planar waveguide (CPW) electrode with a length of LMZI$_2$ = 3.75 mm 1312 terminated by an on-chip 50Ω resistor 1313. The device was fabricated on a commercially available 4-inch TFLN wafer and all the layers were photolithographically defined.

The testing setup, shown in FIG. 14a, comprises a tunable laser (the Santec-570) 1410 coupled to the test three-stage RMZI-based modulator 1430 using a lens fiber through a fiber-optic polarization controller 1420. The thermal heaters were controlled with a TO control circuit 1440. Also included in the test setup was an arbitrary wave-function generator (AWG) 1445, a photodetector+data access controller 1450, and a data computer 1455. The phases of MZI$_1$ 1231 and MZI$_3$ 1232 ($\Phi_{1,3}$) were set close to $\pi/2$ with a heater voltage. V$_1$ and V$_3$ were set to 7.7V so that the beam splitting ratio of MZI$_1$ 1231 and MZI$_3$ 1232 was close to 0.5. The phase of MZI$_2$ 1155 with CPW electrodes ($\Phi_2$) was set close to $\pi$ with a heater voltage, V$_2$=10.15V to set the bias condition of the resonator to near critical coupling condition at RF drive voltage, V$_d$ = 0V. FIG. 14b shows the EO modulation of two consecutive resonances 1460, 1465 near $\lambda$=~1550 nm using the heater bias voltages described above as the RF drive voltage (V$_d$) swept from 0V to 1.5V 1466-1469, 1470-1473. This voltage range modifies the coupling condition of the resonator from near critical coupling to under coupling with only a negligible shift in the resonant frequency.

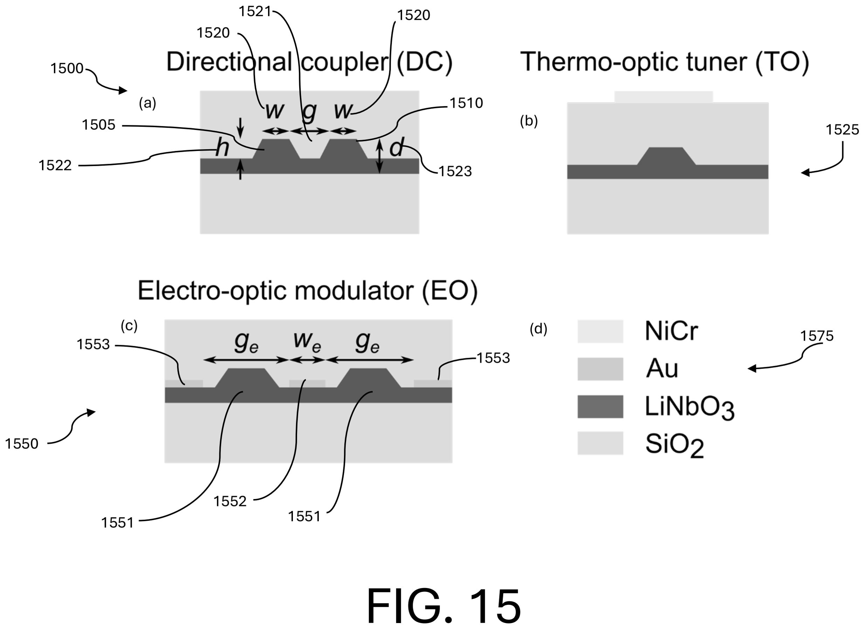

Cross-sections of various device components are shown in FIG. 15. FIG. 15a shows a directional coupler (DC) 1500, FIG. 15b shows a thermo-optic tuner 1525, FIG. 15c shows an electro-optic modulator 1550, and FIG. 15d is a legend 1575 providing a guide to the various materials used in each component. As shown in FIG. 15a, each directional coupler (DC) 1500, such as DC1-DC4 (1293-1296) of modulator 1200 of FIG. 12a, are typically formed by placing two waveguide sections 1505, 1510 near and parallel to each other. Adiabatic couplers and multimode interferometers can also be used. For an ideal tunable MZI, 3-dB couplers with perfect splitting ratios of 0.5:0.5 are desirable. In reality, however, fabrication errors on the cross-sectional dimensions of directional couplers can sometimes occur, causing the splitting ratio to deviate from the ideal value. For TFLN, deviations up to 200 nm on both the width (w) 1520 and the gap (g) 1521, as well as up to 20 nm on the etch depth (h) 1522 and 10 nm on the total LN thickness (d) 1523 can be found, leading to imperfect splitting ratios of up to 0.65:0.35 or even higher.

FIG. 15b shows a cross section of a thermo-optic tuner (TO) 1225, such as thermo-optic tuners TO1-TO5 1175, 1291, 1292 of FIGs. 11a and 12a. The thermo-optical tuners (TO$_4$, TO$_5$) 1291, 1292 of active MZI circuits 1231, 1232 in modulator 1200 can be used to bias the steady state of the coupler section (DC$_1$-DC$_4$) and the heater in the waveguide loop (TO$_1$) 1175 can be used to align the resonant wavelength of the device to the input light. The EO-MZI section 1550 in FIG. 15c can be modulated with a traveling-wave co-planar RF electrode designed such that its phase velocity and impedance can be matched with the group velocity of the optical mode and the driving circuit, respectively. The EO-MZI section 1550 comprises optical waveguides 1551 placed between the signal electrode 1552 and one of the two ground electrodes 1553.

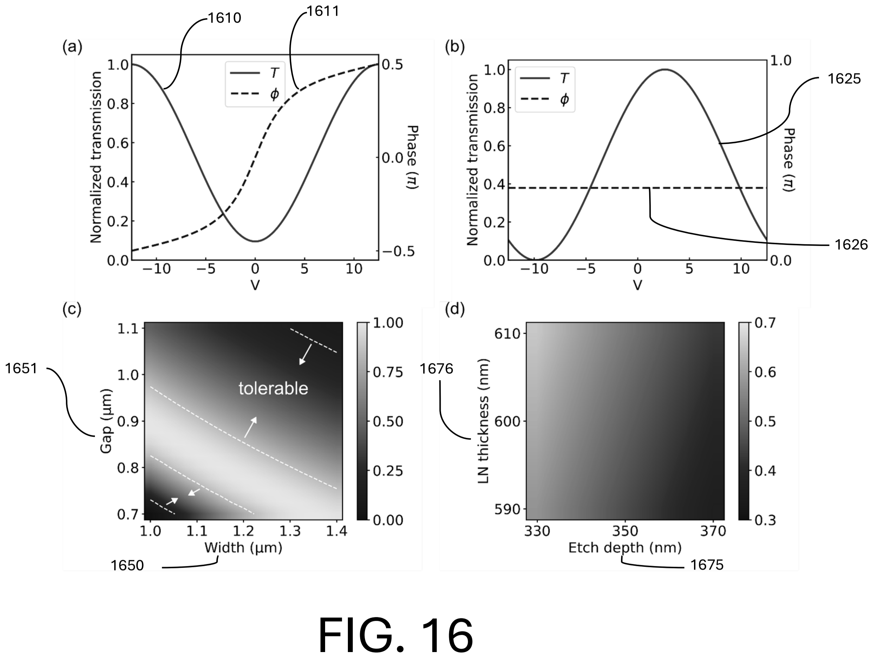

FIGs. 16a and b show a comparison of transmission power ratio and phase of the single-stage RMZI-based modulator 1100 of FIG. 11a with the three-stage RMZI-based modulator 1200 of FIG. 12a, with FIG. 16a showing the single-stage RMZI-based modulator 1100 transmission power ratio 1610 and phase 1621 and FIG. 16b showing the transmission power ratio 1625 and phase 1626 of the three-stage RMZI-based modulator 1200. The single-stage RMZI modulator curves 1610, 1611 shown in FIG. 16a assume an imperfect power splitting ratio of 0.65:0.35 on DC1 1131 and DC2 1132. FIG. 16c illustrates power splitting of a directional coupler (DC), such as DC1 1131 or DC2 1132 at varying waveguide width (w) 1650 and gap (g) 1651. Power splitting of a DC at varying etch depth (h) 1675 and total LN thickness (d) 1676 is illustrated in FIG. 16d. As shown in FIG. 16c, a range of 0.01-0.99 in the power splitting of a directional coupler can be caused by in-plane geometry deviations. As shown in FIG. 16d, a range of 0.36-0.65 can be further caused by layer thickness deviations, even with precise in-plane geometry.

For an arbitrary DC power splitting ratio sin$^2\theta$:cos$^2\theta$, a thermal phase bias of $\varnothing_c(\theta) = \arccos\frac{1}{tan^2 2\theta}$ can tune the MZI into near-perfect 0.5:0.5 splitting, as long as the DC power splitting ratio falls between $sin^2\frac{\pi}{8} \approx 0.15$ and $sin^2\frac{3\pi}{8} \approx 0.85$. As shown in FIG. 16b (which plots the transmission power ratio 1625 and phase 1626 of the three-stage RMZI-based modulator 1200 with the proper thermal bias $\varnothing_c$) full range tuning of the coupling ratio can be achieved, along with a flat transmission phase decoupled from EO tuning. In the fabrication dimension range plotted in FIG. 16c, a major portion of the fabrication error values are tolerable in embodiments of the three-stage MZI configuration and, in FIG. 16d, all of the plotted fabrication error values are tolerable.

When the 2x2 directional couplers 1131, 1132 of the single-stage RMZI-based modulator 1100 of FIG. 11a produce the desired 50:50 splitting ratio, the coupling modulation condition can be achieved in the modulator 1100 to deliver a high modulation bandwidth with a low operational voltage on a relatively small device footprint. However, directional coupler fabrication imperfections can create an imperfect splitting ratio that can impact device performance of the single-stage RMZI-based modulator 1100 in two ways: incomplete coverage of or undesirable coupling ratio, which limits the tunability, and phase shift at the coupler section associated with EO tuning, which pulls the waveguide resonator off its resonance upon modulation. The phase shift effect, in particular, can induce a decrease in the modulation bandwidth. However, any imperfect splitting ratio caused by fabrication imperfections in the directional couplers 1131, 1132 can be cured by replacing the directional couplers 1131, 1132 of the single-stage RMZI-based modulator 1100 of FIG. 11a with the active, MZI circuits 1231, 1232 of the three-stage RMZI-based modulator 1200 of FIG. 12a. The thermal tuners ($TO_4$, $TO_5$) 1291, 1292 of active MZI circuits 1231, 1232 can be used to correct any imperfections in the splitting ratio thus resolving the device performance issues mentioned above.

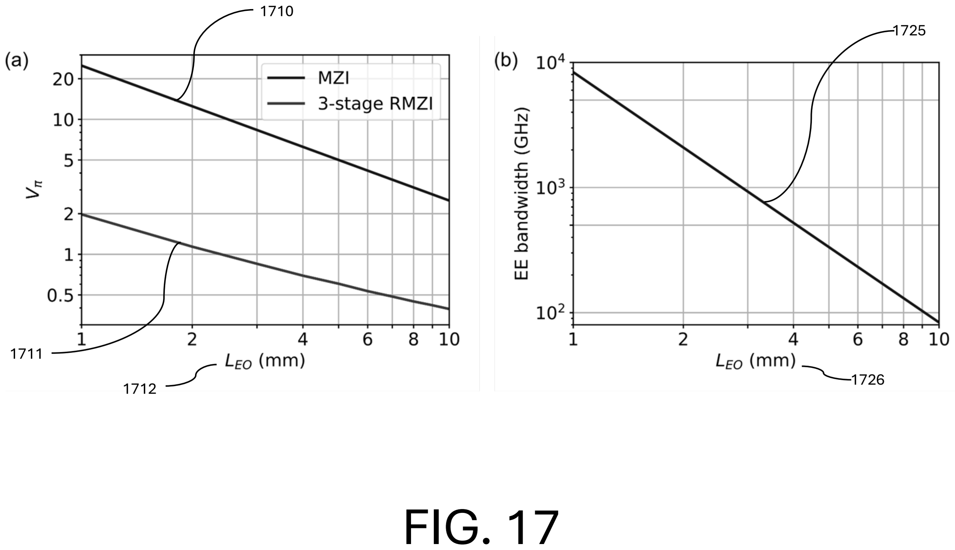

As described in detail herein, embodiments of the three-stage RMZI-based modulator 1200 can provide improvements in both modulation voltage and modulation bandwidth by compensating for fabrication errors that may be present in the directional couplers (DC1, DC2) usually used for power splitting in an RMZI-based modulator. For an EO modulation section with a fixed EO efficiency ($V_\pi L$), there is an intrinsic trade-off between the section length $L_{EO}$ and the voltage $V_\pi$. However, the resonance structure in the RMZI enables a reduction in the modulation voltage without sacrificing the length $L_{EO}$, compared to non-resonant MZI devices. In Fig. 17a, modulation voltage ($V_\pi$) of an MZI 1710 and a three-stage RMZI modulator 1711 at various $L_{EO}$ 1712 are plotted for comparison. A reduction of 6-12 times in modulation voltage can be achieved in the $L_{EO}$ range of 1-10 mm. This improvement in modulation voltage efficiency enables a compact device footprint within the limitation of CMOS-compatible voltage, which further increases the modulation bandwidth.

As described above, the electrical (EE) bandwidth of a traveling-wave modulator is quadratic-inversely proportional to the electrode length, given by the RF loss on the electrodes. FIG. 17b plots electrical bandwidth 1725 as a function of electrode length ($L_{EO}$) 1726. For a non-resonant MZI modulator operating at a CMOS voltage of 1 V, an $L_{EO}$ of 25 mm is needed, which limits the EE bandwidth down to ~ 13 GHz. To overcome this bandwidth limitation, a power-hungry analog voltage driver amplifier is needed, which brings further complexity and power consumption to the device. However, while the bandwidth of such modulators may be ultimately limited by other factors such as the driving frequency from the DAC or the electronic driver, a much shorter $L_{EO}$ of ~2.5 mm can be used for a three-stage RMZI-based modulator, such as modulator 1200 of FIG. 12a, with little or no limitation on the EE bandwidth.

Also, apart from the electrodes, embodiments of the three-stage RMZI-based modulator 1200 do not exhibit additional bandwidth limitations from the cavity dynamics, due to its coupling modulation configuration. Whereas, photon lifetime in the cavity of other modulators can sometimes create an additional bandwidth limitation (which can be below 1 GHz) due to a shifting resonant wavelength sometimes caused by fabrication errors. Example embodiments described herein solve this problem by replacing the passive directional couplers with tunable TO-MZI sections. It may even be possible to realize improvements in the $V_\pi L$ with other slight design modifications such as bringing the electrodes closer to the waveguide structure. Nevertheless, the improvements described above, which originate from the resonator layout, can be realized with or without other design modifications as they are independent of improvements from other design parameters. As can be easily appreciated, the example embodiments described herein can provide a low form factor, high bandwidth, optical modulator with a low (CMOS-level) driving voltage.

The example optical FP/MZM modulators described above may also have several advantages over resonant micro-ring modulators where the MZM is a part of a high-finesse micro-ring cavity. Placing an MZM in one of the FO cavity mirrors rather than within a resonator enabled substantial decoupling of the FP cavity and MZM designs; e.g., in the FP/MZM modulators such as those described above, the MZM length may be varied without changing the resonant wavelengths and the FSR of the cavity, e.g., the FP cavity of the FP/MZM modulators may be configured to have the resonant wavelengths aligned with, e.g., an ITU grid, for any desired length of the MZM in one of the FP cavity mirrors. Furthermore, light of any such resonant wavelength may be modulated by the FP/MZM modulator described above without changing the bias settings thereof; this is in contrast with a micro-ring based MZI modulator where the cavity follows the sinusoidal response of the MZI modulator.

Furthermore, high-finesse (Q>1000) resonant optical modulators, e.g. micro-ring or racetrack based, may suffer from effects related to an increased photon lifetime in the cavity, which may both impose limitations on the modulation bandwidth of the modulator and lead to instabilities due to the photo-refractive (PR) effect in the EO material of the resonator. The PR effect, which may be significant in ferro-electric materials such as the LN, causes the refractive index of the EO material, and thus the resonant frequencies of the resonator, to be changed by light circulating in the cavity. The strength of the PR effect depends on the energy density of light in the material, with high-Q, high-finesse resonators accumulating more light energy within the resonator and thus are more likely to suffer from the PR-induced instabilities. The FP/MZM modulators of the type described above may use significantly lower-finesse FP cavities than the reported micro-ring assisted high-Q modulators. In some implementations, the FP/MZM modulators of the type described above may be configured to have an average finesse of the FP cavity thereof of less than 50, or less than 20 typically, e.g. in the range from about 10 to about 5. The average finesse of the FP cavity here is the arithmetic mean of the maximum and minimum values of the FP cavity finesse in operation, i.e. when the transmission of the MZM(s) in the WLM(s) of the FP cavity is modulated by a data signal.

The examples of optical modulators described above are not intended to be limiting, and many variations will become apparent to a skilled reader having the benefit of the present disclosure, including different waveguide and electrode configurations. For example, the optical waveguide arms of any of the MZMs described above may include electro-optical materials other than lithium niobate, including but not limited to other ferroelectric materials such as thin-film lithium tantalate and thin-film barium titanate, or semiconductor materials, e.g. silicon, silicon carbide, or compound semiconductors such as InP or GaAs alloys, which may or may not include PN junctions. The FP/MZM coupling modulators such as those described above may also operate in reflection, e.g. using an optical circulator to separate the output, modulated light from the input CW light.

According to an example embodiment disclosed above, e.g., in the summary section and/or in reference to any one or any combination of some or all of FIGs. 1-17, provided is an apparatus comprising an electro-optical (EO) modulator (e.g., 200, FIG. 2; 300, FIG. 3; 400, FIG. 4; 500, FIG. 5; 600, FIG. 6; 700, FIG. 7A, 1100, FIG. 11A, 1200, FIG. 12A). The EO modulator may be integral with a substrate (e.g. 390, FIG. 3; 490, FIGs. 4-6; 705, FIG. 7A), e.g. disposed along a top surface (e.g. 391, FIG. 3; 491, FIGs. 4-6; 715, FIG. 7A) of the substrate. The EO modulator comprises an optical waveguide segment (e.g., 115, FIG. 2; 315, FIG. 3; 415, FIGs. 4-6) connected between two optical waveguide loop mirrors (e.g., 220a and 120b, FIG. 2; 320a and 320b, FIG. 3; 420a and 420b, FIG. 4; 420a and 420c, FIGs. 5 and 6). At least one of the two optical waveguide loop mirrors (e.g., 220a, FIG. 2; 320a and 320b, FIG. 3; 420a, FIGs. 4 - 6) comprises a Mach-Zehnder modulator (MZM) (e.g., 230, FIG. 2; 360a or 360b, FIG. 3; 460, FIGs. 4 - 5, and 660, FIG. 6).

In some implementations, the MZM may comprise two optical waveguide arms (e.g. 363, FIGs. 3-6, 1179, FIGa. 11a and 12a) connected between two 2x2 optical waveguide couplers (e.g. 331 and 332, FIGs. 3-6, 1131 and 1132, FIG. 11a, 1231 and 1232, FIG. 12a). The at least one of the two optical waveguide loop mirrors may further comprise a loop waveguide (e.g. 140, FIG. 2; 340, FIG. 3; 440, FIGs. 4-6) interconnecting two outer ports of one of the two 2x2 optical waveguide couplers. At least one of the 2x2 optical waveguide couplers (e.g. 130, FIG. 2; 331 and/or 332, FIGs. 3-6; 431, FIG. 4, 1131 and/or 1132, FIG. 11a) may be, e.g., a directional optical waveguide coupler.

In any of the above implementations, the other of the two optical waveguide loop mirrors (e.g. 120b, FIG. 2; 420b, FIG. 4; 420c, FIGs. 5, 6) may comprise at least one 2x2 optical waveguide coupler (e.g., 130, FIG. 2; 332, FIGs. 3, 5, 6; 431, FIG. 4) connected to a loop optical waveguide (e.g., 140, FIG. 2; 340, FIG. 3; 440, FIGs. 4-6).

In any of the above implementations, the MZM may comprise a layer of ferro-electric material (e.g. 730, FIGs. 7A and 7B) disposed over the top surface of the substrate. In some implementations, the ferro-electric material may comprise lithium niobate. In some implementations, the ferro-electric material may comprise lithium tantalate. In some implementations, the ferro-electric material may comprise barium titanate.

In any of the above implementations, the planar EO modulator may comprise a set of electrodes (e.g. 361, 362, 361, FIGs. 3-7A, 1161, 1162, 1161, FIGs. 11A and 12A) configured to electro-optically modulate light in the MZM (e.g. 360a or 360b, FIG. 3; 460, FIGs. 4-5, and 660, FIG. 6).

In any of the above implementations, the other of the two optical waveguide loop mirrors may comprise another MZM (e.g. 360b, FIG. 3), a 2x2 waveguide coupler (e.g. 431, FIG. 4), or an MZI (e.g. 555, FIG. 5 or 655, FIG. 6, 1155, FIGs. 11A and 12A). In some implementations, the MZI may comprise a bias tuning section (e.g., 470, FIG. 5; 670c, FIG. 6).

In many of the above implementations, the optical waveguide segment and the two optical waveguide loop mirrors may form a planar Fabry-Perot cavity (e.g., 250, FIG. 2; 350, FIG. 3; 450, FIG. 4; 550, FIG. 5, or 650, FIG. 6). In many of such implementations, an input optical waveguide (e.g., 111 or 117, FIG. 2; 311, FIG. 3; 411 or 417, FIGs. 4-6, 1111 or 1117, FIGs. 11A and 12A) may be connected to launch light into the planar Fabry-Perot cavity via one of the two optical waveguide loop mirrors (e.g., 220a or 120b, FIG. 2; 320a, FIG. 3; 420a or 420b, FIG. 4; 420a or 420c, FIGs. 5, 6). An output optical waveguide (e.g., 117 or 111, FIG. 2; 317 or 311, FIG. 3; 417 or 411, FIGs. 4-6, 1117 or 1111, FIGs. 11A and 12A) may be connected to output modulated light from the planar Fabry-Perot cavity via one of the two optical waveguide loop mirrors (e.g., 220b or 220a, FIG. 2; 320b or 320a, FIG. 3; 420b or 420a, FIG. 4; 420c or 420a, FIGs. 5, 6).

In any of the above implementations, the optical waveguide segment (e.g. 115, 315, or 415) may comprise an electrically tunable section (e.g., 470, FIGs. 4 and 5; 670b, FIG. 6).

In any of the above implementations, one or more of the 2x2 optical waveguide couplers (e.g. 130, FIG. 2; 331 and/or 332, FIGs. 3-6; 431, FIG. 4, 1131 and/or 1132, FIG. 11A) may be replaced with a multi-port $M \times N$ optical coupler, with $M, N \geq 2$; e.g. a 3x2 optical coupler that interconnects a pair of ports at one side thereof with three (2+1) optical ports at the opposite side of the coupler; the added port may be used, e.g. to tap off a small fraction of light, e.g. for monitoring.

According to an example embodiment disclosed above, e.g., in the summary section and/or in reference to any one or any combination of some or all of FIGs. 1-17, provided is an apparatus comprising a planar electro-optical (EO) modulator (e.g., 200, FIG. 2; 300, FIG. 3; 400, FIG. 4; 500, FIG. 5; 600, FIG. 6; 700, FIG. 7, 1100, FIG. 11A, 1200, FIG. 12A) disposed along a top surface (e.g. 391, FIG. 3; 491, FIGs. 4-6; 715, FIG. 7A) of a substrate (e.g. 390, FIG. 3; 490, FIGs. 4-6;

705, FIG. 7A). The EO modulator comprises a ferro-electric optical layer (e.g. 730, FIGs. 7A, 7B) disposed over the top surface of the substrate. The EO modulator further comprises a planar optical waveguide Fabry-Perot (FP) cavity (e.g. 250, FIG. 2; 350, FIG. 3; 450, FIG. 4; 550, FIG. 5, and 650, FIG. 6) formed, at least in part, in the ferro-electric optical layer and comprising two planar optical waveguide loop mirrors (e.g., 220a and 120b, FIG. 2; 320a and 320b, FIG. 3; 420a and 420b, FIG. 4; 420a and 420c, FIGs. 5 and 6) and an optical waveguide segment (e.g., 115, FIG. 2; 315, FIG. 3; 415, FIGs. 4-6) connected therebetween. At least one of the two optical waveguide loop mirrors (e.g., 220a, FIG. 2; 320a and 320b, FIG. 3; 420a, FIGs. 4 - 6) comprises a Mach-Zehnder modulator (MZM) (e.g., 230, FIG. 2; 360a or 360b, FIG. 3; 460, FIGs. 4 - 5, 660, FIG. 6). In at least one implementation, the ferro-electric layer comprises one of thin-film Lithium Niobate, thin-film Lithium Tantalate and thin-film Barium Titanate.

According to an example embodiment disclosed above, e.g., in the summary section and/or in reference to any one or any combination of some or all of FIGs. 1-17, further provided is a method (e.g. 1000, FIG. 10) for modulating light (e.g., 101, FIGs. 2, 3). The method comprises (e.g. 1010, FIG. 10) launching the light into an optical waveguide FP cavity (e.g., 250, FIG. 2; 350, FIG. 3; 450, FIG. 4; 550, FIG. 5, 650, FIG. 6) comprising two planar optical waveguide loop mirrors (e.g., 220a and 120b, FIG. 2; 320a and 320b, FIG. 3; 420a and 420b, FIG. 4; 420a and 420c, FIGs. 5 and 6) and an optical waveguide segment (e.g., 115, FIG. 2; 315, FIG. 3; 415, FIGs. 4-6) connected therebetween, at least one of the two planar optical waveguide loop mirrors comprising an MZM (e.g., 230, FIG. 2; 360a or 360b, FIG. 3; 460, FIGs. 4 - 5, and 660, FIG. 6). The method further comprises (e.g. 1020, FIG. 10) applying a modulating electrical signal (e.g. 233, FIG. 2) to the MZM to modulate a coupling of the light into the FP cavity. In some implementations, the method may comprise electro-optically or thermally tuning a refractive index in the optical waveguide segment to adjust a resonant wavelength of the optical waveguide FP cavity, e.g. to a wavelength of the light being modulated. Any of the above implementations of the method may comprise using an electrically tunable MZI (e.g. 555, FIG. 5, 655, FIG. 6, 1155, FIGs. 11A and 12A) in the other one of the two planar optical waveguide loop mirrors to tune at least one of: coupling of the light into the FP cavity, coupling of the light out of the FP cavity, and the finesse of the FP cavity.

In some implementations, the method may comprise launching the light into the FP cavity via one of the two optical waveguide loop mirrors (e.g., 220a or 120b, FIG. 2; 320a or 320b, FIG. 3; 420a or 420b, FIG. 4; 420a or 420c, FIGs. 5 and 6) and outputting the modulated light from the other one of the two optical waveguide loop mirrors (e.g., 120b or 220a, FIG. 2; 320b or 320a, FIG. 3; 420b or 420a, FIG. 4; 420c or 420a, FIGs. 5 and 6).

In some implementations, the method may comprise launching the light into the FP cavity via one of the two optical waveguide loop mirrors (e.g., 220a or 120b, FIG. 2; 320a or 320b, FIG. 3; 420a or 420b, FIG. 4; 420a or 420c, FIGs. 5 and 6) and collecting light reflected from said optical waveguide loop mirror as the modulated light (e.g., 207, FIGs. 2,3).

It will be further understood that various changes in the details, materials, and arrangements of the parts which have been described and illustrated in order to explain the nature of this disclosure may be made by those skilled in the art without departing from the scope of the disclosure, e.g., as expressed in the following claims. Various features described above with reference to a specific embodiment or embodiments may be combined with other embodiments.

Unless explicitly stated otherwise, each numerical value and range should be interpreted as being approximate as if the word "about" or "approximately" preceded the value or range.

The use of figure numbers and/or figure reference labels is intended to identify one or more possible embodiments of the claimed subject matter in order to facilitate the interpretation of the claim elements and equivalents. Such use is not to be construed as necessarily limiting the scope of those claims to the embodiments shown in the figures or described in the specification.

Reference herein to "one embodiment" or "an embodiment" means that a particular feature, structure, or characteristic described in connection with the embodiment can be included in at least one embodiment of the disclosure. The appearances of the phrase "in one embodiment" in various places in the specification are not necessarily all referring to the same embodiment, nor are separate or alternative embodiments necessarily mutually exclusive of other embodiments. The same applies to the term "implementation."

Furthermore, in the description above, for purposes of explanation and not limitation, specific details are set forth such as particular architectures, interfaces, techniques, etc. in order to provide a thorough understanding of the example embodiments described herein. In some instances, detailed descriptions of well-known devices, circuits, and methods are omitted so as not to obscure the description of the example embodiments with unnecessary detail. Thus, for example, it will be appreciated by those skilled in the art that block diagrams herein can represent conceptual views of illustrative circuitry embodying the principles of the technology. All statements herein reciting principles, aspects, and embodiments of the disclosure, as well as specific examples thereof, are intended to encompass both structural and functional equivalents thereof.

Thus, while example embodiments have been particularly shown and described with reference the figures, it will be understood by one skilled in the art that various changes in detail may be affected therein without departing from the spirit and scope of the invention as defined by the claims.

**Claims**

1. An electro-optic (EO) modulator comprising:

a Mach-Zehnder interferometer (MZI) having an MZI head and an MZI tail, the MZI comprising a signal electrode, two ground electrodes, and two optical waveguides,
a first MZI tuning circuit connected to the MZI head;
a second MZI tuning circuit connected to the MZI tail; and
a bus waveguide connected between the first and second MZI tuning circuits;
wherein the first and second MZI circuits act as tunable beam splitters configured to split power between the two optical waveguides in a beam splitting ratio of approximately 50:50 ensuring that a coupling modulation condition is achieved and maintained causing the MZI to act as a coupler section of a traveling-wave resonator so that input light fed into the EO modulator is modulated at a resonant wavelength aligned with the input light.

2. The EO modulator of claim 1 wherein the signal electrode is situated generally parallel to and in between the two ground electrodes with one of the two optical waveguides running between the signal electrode and one of the ground electrodes on one side of the signal electrode and another of the two optical waveguides running between the signal electrode and the other one of the ground electrodes on another side of the signal electrode such that ends of the optical waveguides form two MZI arms on a proximate end of the MZI and two MZI arms on a distal end of the MZI, the two proximate MZI arms forming the MZI head and the two distal MZI arms forming the MZI tail.

3. The EO modulator of claim 2, wherein each of the first and second MZI tuning circuits comprises two waveguides, a thermal tuner (TO) and two directional couplers (DC), the TO being connected in series between the two DC on one of the two waveguides and each of the two DC being connected to the two waveguides on opposite ends of each MZI tuning circuit.

4. The EO modulator of claim 3, wherein each of the two distal waveguide ends of the first MZI tuning circuit is connected to one of the two proximate MZI arms and each of the two proximate waveguide ends of the second MZI tuning circuit is connected to one of the two distal MZI arms; and wherein one of the two proximate waveguide ends of the first MZI tuning circuit and one of the two distal waveguide ends of the second MZI tuning circuit comprise input/output waveguides.

5. The EO modulator of claim 4, wherein one end of the bus waveguide is connected to the other of the two proximate waveguide ends of the first MZI tuning circuit and another end of the bus waveguide is connected to the other of the two distal waveguide ends of the second MZI tuning circuit.

6. The EO modulator of claim 5, wherein the TO in the first and second MZI tuning circuits can be used to control the beam splitting ratio.

7. The EO modulator of claim 5, further comprising a bus waveguide TO connected to the bus waveguide between the first and second MZI tuning circuits, the bus waveguide TO being configured to control optical phase accrued by light propagating in the bus waveguide.

8. The EO modulator of claim 5, further comprising two MZI arm thermal tuners (TO), one MZI arm TO connected to one of the proximate MZI arms and the other MZI arm TO connected to another of the proximate MZI arms, the two MZI arm TO configured to adjust a refractive index of one or both of the MZI arms.

9. The EO modulator of claim 1, wherein the EO modulator is a thin-film lithium niobate (TFLN) integrated photonic modulator.

10. The EO modulator of claim 1, wherein the EO modulator is a thin-film lithium tantalate (TFLT) integrated photonic modulator.

11. The EO modulator of claim 1, wherein the EO modulator is fabricated on a TFLN wafer.

12. The EO modulator of claim 1, wherein the EO modulator is fabricated on a TFLT wafer.

13. The EO modulator of claim 1, wherein a total coupling section of the EO modulator comprises the first and second MZI tuning circuits and the MZI.

14. The EO modulator of claim 1, wherein optical phase across the first and second MZI tuning circuits and the MZI remains invariant under EO modulation.

15. The EO modulator of claim 4, wherein the two MZI arm thermal tuners and the first and second MZI tuning circuit thermal tuners can be used to bias a steady state of a coupler section of the EO modulator.

FIG. 1

FIG. 2

FIG. 3

EP 4 756 526 A1

FIG. 4

FIG. 5

**FIG. 6**

EP 4 756 526 A1

FIG. 7A

FIG. 7B

FIG. 8

FIG. 9

1000

```
┌────────────────────────────────────┐
│  Launching light into an integrated │
│  optical FP cavity having an MZM in  │        ──1010
│                                      │
│    one of the FP cavity mirrors      │
└────────────────────────────────────┘
                   │
                   ▼
┌────────────────────────────────────┐
│  Applying a modulating electrical signal │
│   to the MZM to modulate coupling of │
│  the light into the FP cavity or coupling │   ──1020
│                                      │
│  of modulated light out of the FP cavity │
└────────────────────────────────────┘
```

FIG. 10

FIG. 11

EP 4 756 526 A1

FIG. 12

EP 4 756 526 A1

FIG. 13

FIG. 14

EP 4 756 526 A1

FIG. 15

FIG. 16

FIG. 17

## EUROPEAN SEARCH REPORT

**Application Number**

EP 25 22 0682

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 239 403 A1 (NOKIA SOLUTIONS & NETWORKS OY [FI]) 6 September 2023 (2023-09-06) * paragraph [0038] - paragraph [0039] * * paragraphs [0043], [0062], [0063] * * paragraph [0070] - paragraph [0077] * * figures 6, 7 * * paragraph [0085] - paragraph [0086] * ----- | 1-15 | INV. G02F1/21 G02F1/225 |
| A | US 2023/055077 A1 (SHI RUIZHI [US] ET AL) 23 February 2023 (2023-02-23) * paragraphs [0005], [0017] - [0019] * * figure 1A * ----- | 1-15 | |
| A | US 2022/365400 A1 (ZEILER MARCEL [DE] ET AL) 17 November 2022 (2022-11-17) * paragraph [0020] - paragraph [0021] * * claim 3 * * figure 1 * ----- | 1-15 | |

**TECHNICAL FIELDS SEARCHED (IPC)**

G02F

The present search report has been drawn up for all claims

| Place of search | Date of completion of the search | Examiner |
|---|---|---|
| The Hague | 24 March 2026 | Votini, Stefano |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 22 0682

This annex lists the patent family members relating to the patent documents cited in the above-mentioned European search report.
The members are as contained in the European Patent Office EDP file on
The European Patent Office is in no way liable for these particulars which are merely given for the purpose of information.

24-03-2026

| Patent document cited in search report | | Publication date | Patent family member(s) | | Publication date |
|---|---|---|---|---|---|
| EP 4239403 | A1 | 06-09-2023 | EP | 4239403 A1 | 06-09-2023 |
| | | | US | 2023251546 A1 | 10-08-2023 |
| US 2023055077 | A1 | 23-02-2023 | EP | 4137881 A1 | 22-02-2023 |
| | | | US | 2023055077 A1 | 23-02-2023 |
| US 2022365400 | A1 | 17-11-2022 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20230055077 A